(19) Europäisches Patentamt
European Patent Office
Office européen des brevets

(11) **EP 2 038 694 B1**

(12) **EUROPÄISCHE PATENTSCHRIFT**

(45) Veröffentlichungstag und Bekanntmachung des Hinweises auf die Patenterteilung:
**22.05.2013 Patentblatt 2013/21**

(21) Anmeldenummer: **07764799.8**

(22) Anmeldetag: **22.06.2007**

(51) Int Cl.:
*G02C 7/06* (2006.01)     *G02C 7/02* (2006.01)

(86) Internationale Anmeldenummer:
**PCT/EP2007/005532**

(87) Internationale Veröffentlichungsnummer:
**WO 2008/000397 (03.01.2008 Gazette 2008/01)**

(54) **BRILLENGLASPAAR BEI ANISOMETROPIE**

PAIR OF SPECTACLE LENSES FOR ANISOMETROPIA

PAIRE DE VERRES DE LUNETTES POUR ANISOMÉTROPIE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.06.2006 DE 102006030204**

(43) Veröffentlichungstag der Anmeldung:
**25.03.2009 Patentblatt 2009/13**

(73) Patentinhaber: **Rodenstock GmbH**
**80687 München (DE)**

(72) Erfinder:
• **ESSER, Gregor**
**81735 München (DE)**

• **SCHMID, Leonhard**
**82399 Raisting (DE)**
• **ALTHEIMER, Helmut**
**87650 Baisweil-Lauchdorf (DE)**
• **BECKEN, Wolfgang**
**81541 München (DE)**

(74) Vertreter: **Müller-Boré & Partner**
**Patentanwälte**
**Grafinger Straße 2**
**81671 München (DE)**

(56) Entgegenhaltungen:
WO-A-01/46744      WO-A-2004/086125
DE-A1- 4 414 106      US-A- 2 442 849
US-A- 4 781 452

**Beschreibung**

Die Erfindung betrifft ein Verfahren zur Optimierung und Herstellung von Brillengläsern für Brillenglaspaare zur Korrektur der Anisometropie eines Brillenträgers.

Ferner bezieht sich die Erfindung auf ein Computerprogrammerzeugnis, ein Speichermedium, eine Vorrichtung zum Durchführen des Verfahrens, sowie ein Brillenglaspaar und dessen Verwendung zur Korrektur der Anisometropie eines Brillenträgers.

Beim Blicken durch eine Brille führt das Augenpaar ständig Blickbewegungen aus, wodurch sich die Durchblickpunkte innerhalb der Brillengläser verlagern. Blickt das Augenpaar durch zwei Stellen in beiden Brillengläsern, welche verschiedene prismatische Nebenwirkungen erzeugen, wird eine künstliche Heterophorie erzeugt und die Fusion beansprucht.

Liegt eine Anisometropie (d.h. eine ungleiche Fernpunktrefraktion beider Augen) vor, unterscheiden sich die Brillengläser in ihrer Wirkung. Wenn das Augenpaar gleichsinnige Blickbewegungen hinter der Brille ausführt, so ergeben sich - im Gegensatz zu einer Brille mit rechts und links gleicher Wirkung - verschiedene prismatische Nebenwirkungen in dem linken und dem rechten Durchblickpunkt, welche die Fusion bzw. das Binokularsehen belasten.

Die prismatischen Imbalanzen, welche als die Differenz der prismatischen Wirkungen in den korrespondierenden Durchblickpunkten des rechten und des linken Brillenglases definiert sind, nehmen mit der Zunahme des Blickwinkels stark zu, da die prismatische Nebenwirkung in erster Näherung nach der so genannten Prentice-Formel vom Blickwinkel (Entfernung $c$ vom optischen Mittelpunkt) und der optischen Wirkung $D$ abhängen:

$$\Delta P = c * (D_R - D_L) \qquad (1)$$

.

wobei $D_R$ die dioptrische Wirkung des rechten Brillenglases und $D_L$ die dioptrische Wirkung des linken Brillenglases bezeichnet.

Bei Einstärkenbrillengläsern ist es zumindest möglich, im Hauptdurchblickpunkt sowohl die prismatische Wirkung als auch den Brechwert und den Astigmatismus optimal einzustellen. Bei progressiven Brillengläsern (Gleitsichtgläsern) hingegen ist dies nicht mehr in den Bezugspunkten (Fern- und Nahbezugspunkt) möglich, da diese außerhalb der optischen Mitte liegen.

Um diesem Problem entgegenzutreten, wurden daher progressive Brillengläser oftmals mit einem so genannten Slab-Off-Schliff versehen. Hierbei wird bei einem Brillenglas entlang einer horizontalen Linie, welche in der Regel durch den optischen Mittelpunkt verläuft, die Fläche verkippt. Die prismatische Wirkung in der oberen Hälfte des Brillenglases (d.h. oberhalb der horizontalen Linie) kann somit anders als in der unteren Hälfte des Brillenglases (d.h. unterhalb der horizontalen Linie) eingestellt werden, so daß ein Abgleich der prismatischen Wirkung rechts und links erfolgen kann.

Dieses Verfahren weist allerdings den Nachteil auf, daß entlang der horizontalen Linie aufgrund der Unstetigkeit in der ersten Ableitung ein Bildsprung auftritt. Ein weiterer Nachteil liegt darin, daß die Trennlinie sichtbar und damit kosmetisch ungünstig ist. Zusätzlich läßt sich mit dieser Methode nur eine Korrektur der vertikalen prismatischen Komponente in einem Punkt erzielen.

Bei der Optimierung herkömmlicher progressiver Brillengläser ist vorgeschlagen worden, das Binokularsehen durch eine Minimierung der Differenz der Abbildungsfehler zweiter Ordnung (d.h. der Brechwert bzw. die Refraktionsfehler und die astigmatischen Fehler) in den korrespondierenden Durchblickpunkten des rechten und des linken Brillenglases zu verbessern. Ein solches Verfahren wird z.B. in WO 01/46744 beschrieben. Aus WO 2004/086125 ist bekannt beider Optimierung hinsichtlich binokularer Imbalanzen Zielfunktionen zu verwenden.

Es ist eine Aufgabe der Erfindung, die binokularen Eigenschaften von Brillengläsern zur Korrektur einer Anisometropie zu verbessern.

Diese Aufgabe wird durch ein Verfahren zur Herstellung eines Brillenglases mit den Merkmalen des Anspruchs 1, ein Verfahren zur Optimierung und Herstellung eines Brillenglaspaares mit den Merkmalen des Anspruchs 12, ein Computerprogrammerzeugnis mit den Merkmalen des Anspruchs 12, eine Vorrichtung zur Herstellung eines Brillenglases mit den Merkmalen des Anspruchs 14, gelöst. Bevorzugte Ausführungsbeispiele sind in den abhängigen Ansprüchen definiert.

Erfindungsgemäß ist erkannt worden, daß insbesondere das aus WO01/46744 bekannte Verfahren nicht dazu geeignet ist, erhebliche Verbesserungen des Binokularsehens beim Vorliegen einer Anisometropie zu erzielen.

Insbesondere ist erfindungsgemäß erkannt worden, daß herkömmliche Verfahren (wie z.B. in der WO 01/46744 beschrieben) zwar dazu führen, daß die astigmatische Abweichung und die Refraktionsfehler in den korrespondierenden Durchblickstellen bzw. Durchblickpunkten der beiden Brillengläser eines Brillenglaspaares ungefähr gleich sind und ein Brillenträger somit zwei gleich scharfe Bilder sieht, jedoch werden die durch das rechte und linke Brillenglas erzeugten Bilder aufgrund der unterschiedlichen prismatischen Wirkungen in der Regel als Doppelbild gesehen.

Die Erfindung bricht mit der herkömmlichen Vorgehensweise. Gemäß der Erfindung wird vorgeschlagen, statt der Differenz der Refraktionsfehler und der astigmatischen Fehler die Differenz der prismatischen Wirkungen zu minimieren. Um dies zu erreichen werden gemäß der Erfindung die prismatischen Wirkungen bei der Optimierung in die Zielfunktion aufgenommen. Dabei wird bewußt in Kauf genommen, daß die durch das rechte und das linke Brillenglas erzeugten Bilder aufgrund der auftretenden Refraktionsfehler und astigmatischen Fehler nicht mehr gleich scharf gesehen werden. Gemäß dem erfindungsgemäßen Verfahren ist es sogar möglich, daß in den Hauptdurchblickpunkten der beiden Brillengläser keine Vollkorrektur mehr vorliegt. Der Hauptdurchblickpunkt eines Brillenglases kann nach der Bezugspunktforderung mit dem Konstruktionsbezugspunkt, optischen Mittelpunkt oder Anpaßpunkt zusammenfallen.

Überaschenderweise hat sich herausgestellt, daß trotz einer solchen Verschlechterung der Abbildungsqualität des durch das jeweilige Brillenglas erzeugten Bildes, das binokulare Sehen und somit die Verträglichkeit und Akzeptanz des Brillenglaspaares erheblich verbessert werden.

Gemäß der Erfindung wird ein Verfahren zur Optimierung und Herstellung eines Brillenglases vorgeschlagen, welches einen Optimierungs- bzw. Berechnungsschritt zumindest einer der Flächen des Brillenglases unter Berücksichtigung einer Anisometropie $D$ der Augen eines Brillenträgers umfaßt,

wobei der Berechnungs- bzw. Optimierungsschritt derart erfolgt, daß eine Zielfunktion $F$ minimiert wird:

$$\min F = \sum_i gP_i ((PR(i) - PL(i)) - P_{soll}(i))^2 , \qquad (2)$$

wobei:

$PR(i)$     eine tatsächliche prismatische Wirkung an der $i$-ten Bewertungsstelle des Brillenglases;

$PL(i)$     eine prismatische Referenzwirkung an der $i$-ten Bewertungsstelle des Brillenglases;

$P_{soll}(i)$     einen Sollwert der Differenz $\Delta P$ der tatsächlichen prismatischen Wirkung $PR(i)$ und der prismatischen Referenzwirkung $PL(i)$ an der $i$-ten Bewertungsstelle des Brillenglases; und

$gP_i$     eine Gewichtung der prismatischen Wirkung an der $i$-ten Bewertungsstelle des Brillenglases

bezeichnen;

wobei die prismatische Referenzwirkung $PL(i)$ die (tatsächliche) prismatische Wirkung in einem der $i$-ten Bewertungsstelle korrespondierenden Durchblickpunkt eines zweiten Brillenglases ist und das Brillenglas und das zweite Brillenglas ein Brillenglaspaar zur Korrektur der Anisometropie des Brillenträgers bilden, und

wobei der Berechnungs- bzw. Optimierungsschritt ferner derart erfolgt, daß die Differenz $\Delta P$ der prismatischen Wirkung des Brillenglases und der prismatischen Referenzwirkung an der $i$-ten Bewertungsstelle des Brillenglases kleiner als eine obere Grenze ist, und diese Grenze eine Funktion der Anisometropie $D$ und des Abstandes $r$ der $i$-ten Bewertungsstelle vom Prismenbezugspunkt ist:

$$\Delta P(r) < k * r * D ,$$

wobei $k$ eine Konstante kleiner als 1 ist.

Die prismatische Wirkung umfaßt die prismatische Nebenwirkung des Brillenglases und gegebenenfalls das verordnete Prisma und/oder das Dickenreduktionsprisma (vgl. EN ISO 8980-2). Die prismatische Nebenwirkung kann in einer ersten Annäherung nach der Prentice-Regel berechnet werden (vgl. Formel 1).

Die $i$-te Bewertungsstelle bezieht sich auf den jeweiligen Durchstoßpunkt des jeweiligen Hauptstrahls mit der Vorder- bzw. Rückfläche des zu optimierenden Brillenglases. Der Index $i$ dient dazu, die verschiedenen Hauptstrahlen zu indizieren, die im Falle einer Optimierung nacheinander zur Berechnung der Zielfunktion herangezogen werden.

Vorzugsweise werden die den $i$-ten Bewertungsstellen korrespondierenden Durchblickpunkte des zweiten Brillenglases mittels Ray-Tracing unter Annahme der Orthotropie in Gebrauchsstellung des zu optimierenden Brillenglases und des zweiten Brillenglases vor den Augen des Brillenträgers berechnet.

Insbesondere werden dabei der Verlauf eines ersten Hauptstrahls und die zugehörige Wellenfront berechnet. Der erste Hauptstrahl wird vorzugsweise als derjenige Strahl definiert, welcher vom Augendrehpunkt des ersten (beispielsweise rechten) Auges durch einen Durchstoßpunkt auf der Vorder- oder Rückfläche des zu optimierenden (beispielsweise rechten) Brillenglases zu einem vorgegebenen Objektpunkt verläuft. Der Durchstoßpunkt des ersten Hauptstrahls mit der Vorder-oder Rückfläche des zu optimierenden Brillenglases stellt die $i$-te Bewertungsstelle dar. Die Berechnung der Wellenfront erfolgt vorzugsweise mittels Wavefront-Tracing.

Anschließend wird der Verlauf eines zweiten Hauptstrahls unter Annahme schneidender Fixierlinien (Orthotropie) iteriert und anschließend die dem zweiten Hauptstrahl zugehörige Wellenfront berechnet. Der zweite Hauptstrahl ist vorzugsweise als derjenige Strahl definiert, welcher durch den vorgegebenen Objektpunkt, das zweite (beispielsweise linke) Brillenglas und den Augendrehpunkt des zweiten (beispielsweise linken) Auges verläuft.

Der Durchstoßpunkt des zweiten Hauptstrahls mit der Vorder- oder Rückfläche des zweiten Brillenglases stellt den der *i*-te Bewertungsstelle korrespondierenden Durchblickpunkt des zweiten Brillenglases dar.

Aus den Daten der Wellenfront können jeweils die astigmatische Abweichung und der Refraktionsfehler der Wellenfront an der *i*-ten Bewertungsstelle des zu optimierenden Brillenglases und die astigmatische Abweichung und der Refraktionsfehler im korrespondierenden Durchblickpunkt des zweiten Brillenglases ermittelt werden. Die astigmatische Abweichung stellt die Differenz des tatsächlichen Astigmatismus des Brillenglases und des geforderten (Soll-) Astigmatismus dar. Ebenfalls stellt der Refraktionsfehler die Differenz des tatsächlichen Brechwerts des Brillenglases und des geforderten (Soll-) Brechwerts dar.

Die astigmatische Differenz stellt die Differenz (nach der Methode der schief gekreuzten Zylinder bzw. Kreuzzylindermethode wie z.B. in US 2003/0117578 beschrieben) der so berechneten astigmatischen Abweichungen des zu optimierenden Brillenglases und des zweiten Brillenglases dar. Nach der Kreuzzylindermethode wird der Unterschied in dem Zylinder bzw. Astigmatismus des linken und des folgendermaßen berechnet werden:

$$zyl_x = zyl_R \cdot \cos(2 \cdot A_R) - zyl_L \cdot \cos(2 \cdot A_L)$$

$$zyl_y = zyl_R \cdot \sin(2 \cdot A_R) - zyl_L \cdot \sin(2 \cdot A_L)$$

$$zyl_{Dif} = \sqrt{zyl_x^2 + zyl_y^2}$$

$$A_{Dif} = a\tan(\frac{zyl_y}{zyl_x})$$

wobei:

$zyl_R$     den Betrag des Zylinders des rechten Brillenglases;

$A_R$     die Achslage des Zylinders des rechten Brillenglases;

$zyl_L$     den Betrag des Zylinders des linken Brillenglases;

$A_L$     die Achslage des Zylinders des linken Brillenglases

$zyl_{Dif}$     den Betrag des resultierenden Zylinders; und

$A_{Dif}$     die Achslage des resultierenden Zylinders

darstellt.

Das Refraktionsgleichgewicht stellt den Absolutbetrag der Differenz der mittleren Wirkungen des zu optimierenden Brillenglases und des zweiten Brillenglases dar.

Die vertikale Prismendifferenz ergibt sich, indem die augenseitigen Hauptstrahlen in die Zyklopenaugenebene projiziert werden und der Winkel zwischen den Geraden in cm/m ausgedrückt wird. Die Zyklopenaugenebene ist die Ebene, welche durch den Punkt in der Mitte der Gerade, welche die Augendrehpunkten der beiden Augen verbindet, geht und senkrecht zu dieser Gerade steht. Die beiden Augen können durchschnittliche Modelaugen (z.B. Gullstrandaugen) sein, welche in einer durchschnittlichen Gebrauchsstellung angeordnet sind (z.B. nach DIN 58 208 Teil 2). Alternativ können die beiden Augen Modelaugen sein, welche den individuellen Parametern eines Brillenträgers Rechnung tragen, und in einer vorgegebenen (individuellen) Gebrauchsstellung angeordnet sind. Hinsichtlich der Definition des Zyklopenauges bzw. der Zyklopenaugekoordinaten wird ferner auf das Lehrbuch "Refraktionsbestimmung" von Heinz Diepes, 3. Auflage DOZ Verlag, Heidelberg 2004, Seiten 74 bis 75 sowie auf das Lehrbuch "Binokular Vision and Stereopsis" von Ian P. Howard, Brian J. Rogers, Oxford University Press, 1995, Seiten 38 bis 39, Seite 560 verwiesen.

Das zu optimierende Brillenglas und das zweite Brillenglas (bzw. das zu optimierende Brillenglaspaar) können in einer vorgegebenen oder vorgebbaren Gebrauchssituation vor den Augen eines durchschnittlichen oder eines bestimmten (individuellen) Brillenträgers angeordnet werden.

Eine durchschnittliche Gebrauchssituation (wie in DIN 58 208 Teil 2 definiert) kann durch:

- Parameter eines Standardauges, wie z.B. dem sogenannten Gullstrand-Auge eines Brillenträgers (Augendrehpunkt, Eintrittspupille, und/oder Hauptebene, etc.);
- Parameter einer Standardgebrauchsstellung bzw. Anordnung des Brillenglaspaares vor den Augen des Brillenträgers (Fassungsscheibenwinkel, Vorneigung, Hornhautscheitelabstand, etc.); und/oder
- Parameter eines Standardobjektmodells bzw. Standardobjektentfernung charakterisiert werden.

Die folgenden numerischen Parameter charakterisieren beispielsweise eine durchschnittliche Gebrauchssituation:

Hornhautscheitelabstand (HSA) = 15,00 mm;
Vorneigung = 8,0 Grad;
Fassungsscheibenwinkel = 0,0 Grad;
Pupillendistanz = 63,0 mm;
Augendrehpunktabstand e = 28,5mm;
Objektabstandmodell: unendlicher Objektabstand im oberen Abschnitt des Brillenglases, welcher fließend in einen Objektabstand von -2,6 dpt bei x = 0 mm, y = -20 mm übergeht.

Bei der Berechnung des Verlaufs des jeweiligen Hauptstrahls und der zugehörigen Wellenfront können jedoch individuelle Parameter des Auges bzw. der Augen eines bestimmten Brillenträgers (Augendrehpunkt, Eintrittspupille, und/oder Hauptebene, etc.), der individuellen Gebrauchsstellung bzw. Anordnung vor den Augen des Brillenträgers (Fassungsscheibenwinkel, Vorneigung, Hornhautscheitelabstand, etc.) und/oder des individuellen Objektentfernungsmodells berücksichtigt werden.

Dabei ist es möglich, die Rezeptdaten der beiden Brillengläser des Brillenglaspaares und/oder die individuellen Daten des Brillenträges, der Gebrauchsstellung und/oder des Objektmodells vorzugsweise per Datenfernübertragung bzw. "online" an eine erfindungsgemäße Vorrichtung zur Herstellung eines Brillenglases zu übermitteln. Die Optimierung des Brillenglases unter Berücksichtigung der Anisometropie des Brillenträgers erfolgt aufgrund der übermittelten, Rezeptdaten und/oder individuellen Daten.

Die erfindungsgemäße Optimierung des Brillenglases kann vorzugsweise monokular erfolgen. Dabei wird lediglich ein Brillenglas zu einem vorgegebenen zweiten Brillenglas iterativ optimiert.

Die Daten des zweiten Brillenglases (Dicke, Pfeilhöhen der Vorder- und der Rückfläche und/oder lokale Krümmungen), welche bei der Berechnung des Verlaufs des Hauptstrahls und der zugehörigen Wellenfront berücksichtigt werden, können theoretische Daten sein, welche sich auf ein Referenz-Brillenglas mit den für die Korrektur des Refraktionsdefzits erforderlichen Rezeptwerten (d.h. mit den vorgegebenen sphärischen, zylindrischen, progressiven und/oder prismatischen Wirkungen) beziehen.

Es ist jedoch möglich, daß die Daten des Brillenglases durch Vermessung der Pfeilhöhen der Vorder- und oder der Rückfläche beispielsweise mittels Abtastvorrichtungen oder einem Interferometer gewonnen werden. Die Vermessung erfolgt vorzugsweise in Punkten eines Rasters, welche in einem vorgegebenen Abstand liegen. Die vollständige Fläche kann nachfolgend z.B. mittels Spline-Funktionen rekonstruiert werden. Dadurch wird ermöglicht, daß etwaige herstellungsbedingte Abweichungen der Pfeilhöhen ebenfalls bei der Berechnung bzw. Optimierung des Brillenglases berücksichtigt werden können. Die Meßdaten des zweiten Brillenglases können ebenfalls per Datenfernübertragung ("online") an eine erfindungsgemäße Vorrichtung zur Herstellung eines Brillenglases übermittelt werden.

Selbstverständlich ist es möglich, daß die beiden Brillengläser eines Brillenglaspaares zur gemeinsamen Verwendung in einer Brille zur Korrektur einer Anisometropie nach dem erfindungsgemäßen Verfahren unter Berücksichtigung der durch die Anisometropie bedingten prismatischen Imbalanzen iterativ optimiert werden.

Vorzugsweise ist eine der beiden Flächen des zu optimierenden Brillenglases, welche vorzugsweise die objektseitige Vorderfläche ist, eine einfache rotationssymmetrische Fläche. Die Optimierung des Brillenglases umfaßt eine Flächenoptimierung der gegenüberliegenden Fläche, welche vorzugsweise die augenseitige Rückfläche ist, so daß die obengenante Zielfunktion minimiert wird. Die so optimierte Fläche ist in der Regel eine nicht rotationssymmetrische Fläche, z.B. eine asphärische, eine atorische oder eine progressive Fläche.

Vorzugsweise erfolgt der Berechnungs- bzw. Optimierungsschritt derart, daß die Differenz der vertikalen prismatische Wirkung und der vertikalen prismatischen Referenzwirkung in der Zielfunktion *F* berücksichtigt wird:

$$\min F = \sum_i gPv_i((PvR(i) - PvL(i)) - Pv_{soll}(i))^2, \qquad (3)$$

wobei:

$PvR(i)$     eine tatsächliche vertikale prismatische Wirkung an der *i*-ten Bewertungsstelle des Brillenglases;

$PvL(i)$     eine vertikale prismatische Referenzwirkung an der *i*-ten Bewertungsstelle des Brillenglases;

$Pv_{soll}(i)$     einen Sollwert der Differenz $\Delta Pv$ der vertikalen prismatischen Wirkung und der vertikalen prismatischen Referenzwirkung an der *i*-ten Bewertungsstelle des Brillenglases; und

$gPv_i$     eine Gewichtung der vertikalen prismatischen Wirkung an der *i*-ten Bewertungsstelle des Brillenglases

bezeichnen.

Die vertikale prismatische Wirkung wird als die jeweilige vertikale Komponente der prismatischen Wirkung definiert.

Unser visuelles System ist insbesondere gegenüber vertikalen prismatischen Imbalanzen bzw. Differenzen der prismatischen Wirkungen in den korrespondierenden Durchblickpunkten des rechten und des linken Brillenglases einer Brille sehr empfindlich. So ist bei einem Wert der Differenz der vertikalen prismatischen Wirkungen von 0,5 cm/m die Fusion der durch das rechte und linke Brillenglas erzeugten Bilder erheblich beeinträchtigt, so daß die beiden Bilder nicht mehr als ein binokulares Einfachbild gesehen werden können.

Vorteilhafterweise erfolgt daher die erfindungsgemäße Optimierung derart, daß die durch die Anisometropie bedingten vertikalen prismatischen Imbalanzen so klein wie möglich, vorzugsweise unter 1,0 cm/m besonders bevorzugt unter 0,5 cm/m zumindest in einem kreisförmigen Bereich mit einem Durchmesser von 10 mm, vorzugsweise 15 mm um den Hauptdurchblickpunkt des zu optimierenden Brillenglases gehalten werden.

Weiter bevorzugt erfolgt der Berechnungs- bzw. Optimierungsschritt derart, daß zusätzlich die Differenz der horizontalen prismatischen Wirkung und der horizontalen prismatischen Referenzwirkung in der Zielfunktion F berücksichtigt wird:

$$\min F = \sum_{i=1}^{N} gPv_i((PvR(i) - PvL(i)) - Pv_{soll}(i))^2 + gPh_i((PhR(i) - PhL(i)) - Ph_{soll}(i))^2, \qquad (4)$$

wobei:

$PhR(i)$     eine tatsächliche horizontale prismatische Wirkung an der *i*-ten Bewertungsstelle des Brillenglases;

$PhL(i)$     eine horizontale prismatische Referenzwirkung an der *i*-ten Bewertungsstelle des Brillenglases;

$Ph_{soll}(i)$     einen Sollwert der Differenz der horizontalen prismatischen Wirkung und der horizontalen prismatischen Referenzwirkung an der *i*-ten Bewertungsstelle des Brillenglases; und

$gPh_i$     eine Gewichtung der horizontalen prismatischen Wirkung Ph an der i - ten Bewertungsstelle des Brillenglases

bezeichnen.

Vorzugsweise erfolgt die erfindungsgemäße Optimierung derart, daß die durch die Anisometropie bedingten horizontalen prismatischen Imbalanzen so klein wie möglich, vorzugsweise unter 2 cm/m zumindest in einem kreisförmigen Bereich mit einem Durchmesser von 10 mm, vorzugsweise 15 mm um den Hauptdurchblickpunkt des zu optimierenden Brillenglases gehalten werden

Die horizontale prismatische Wirkung wird als die horizontale Komponente der prismatischen Wirkung definiert.

Vorzugsweise erfolgt der Berechnungs- bzw. Optimierungsschritt derart, daß zusätzlich zumindest eine weitere Eigenschaft des Brillenglases in der Zielfunktion F berücksichtigt wird:

$$\min F = \sum_i (\sum_k ga_i^k (A_{ist}^k(i) - A_{soll}^k(i))^2) + gP_i((PR(i) - PL(i)) - P_{soll}(i))^2, \qquad (5)$$

wobei:

$A_{ist}^{k}(i)$      eine tatsächliche Eigenschaft $A^k$ an der *i*-ten Bewertungsstelle des Brillenglases;

$A_{soll}^{k}(i)$      eine geforderte Eigenschaft $A^k$ an der *i*-ten Bewertungsstelle des Brillenglases; und

$ga_{i}^{k}$      eine Gewichtung der Eigenschaft $A^k$ an der *i*-ten Bewertungsstelle des Brillenglasesbezeichnet.

Insbesondere kann die zumindest eine Eigenschaft des Brillenglases der Brechwert, der Refraktionsfehler und/oder der astigmatische Fehler an der *i*-ten Bewertungsstelle des Brillenglases sein. Weiter bevorzugt umfaßt die zumindest eine Eigenschaft des Brillenglases die Vergrößerung und/oder die Verzerrung des Brillenglases an der *i*-ten Bewertungsstelle des Brillenglases.

Bei der Berechnung der Brechwertsfehler, der Refraktionsfehler und/oder der astigmatischen Fehler eines Brillenglases können Flächenwerte berücksichtigt werden. Vorzugsweise werden jedoch Gebrauchswerte berücksichtigt, wobei das Brillenglas und das zweite Brillenglas in einer durchschnittlichen oder in einer individuellen Gebrauchssituation angeordnet werden. Die Gebrauchssituation kann insbesondere durch durchschnittliche oder individuelle Parameter (Augendrehpunkt, Eintrittspupille und/oder Hauptebene, etc.) der Augen des Brillenträgers, Parameter einer Gebrauchsstellung (Fassungsscheibenwinkel, Vorneigung, Hornhautscheitelabstand, etc.) und/oder Parameter eines Objektmodells bzw. einer Objektentfernung charakterisiert werden.

Vorzugsweise liegen die Gewichtungskoeffizienten $ga_{i}^{k}$ und $gP_i$ jeweils in einem Bereich zwischen 0,01 und 100.

Weiter bevorzugt ist es, wenn der Berechnungs- bzw. Optimierungsschritt derart erfolgt, daß zusätzlich die astigmatische Differenz und/oder das Refraktionsgleichgewicht an der *i*-ten Bewertungsstelle in der Zielfunktion *F* berücksichtigt werden.

Die astigmatische Differenz ist die Differenz der astigmatischen Abweichungen des ersten und des zweiten Brillenglases (nach der Methode der schief gekreuzten Zylinder). Das Refraktionsgleichgewicht ist der Absolutbetrag der Differenz der mittleren Wirkungen des ersten und des zweiten Brillenglases.

Die astigmatische Abweichung, der Brechwert bzw. die mittlere Wirkung und/oder die Refraktionsfehler der jeweiligen Wellenfront durch das Brillenglas und das zweite Brillenglas können wie oben beschrieben aus den Daten der dem jeweiligen Hauptstrahl zugehörigen Wellenfront ermittelt werden.

Vorzugsweise beträgt die Konstante $\kappa$ für die Differenz der vertikalen prismatischen Wirkungen einen Wert von 0,9, weiter bevorzugt von 0,8. Für die Differenz der horizontalen prismatischen Wirkungen beträgt $\kappa$ vorzugsweise einen Wert von 0,95, weiter bevorzugt von 0,8.

Das zu optimierende Brillenglas und das zweite Brillenglas können Einstärkenbrillengläser, Mehrstärkenbrillengläser oder progressive Brillengläser sein, welche gemeinsam in einer Brille verwendbar sind.

Wenn die beiden Brillengläser des Brillenglaspaares progressive Brillengläser sind, erfolgt der Berechnungs- bzw. Optimierungsschritt vorzugsweise derart, daß

- die Differenz der prismatischen Wirkung und der prismatischen Referenzwirkung im Fernbezugspunkt des Brillenglases kleiner als 1,3 *cm*D*, und vorzugsweise kleiner als 0,8 *cm*D* ist; und/oder
- die Differenz der prismatischen Wirkung und der prismatischen Referenzwirkung im Nahbezugspunkt kleiner als 1,3 *cm*D*, und vorzugsweise kleiner als 1,0 *cm * D* ist.

Das efindungsgemäße Verfahren ist insbesondere vorteilhaft zur Optimierung und Herstellung von Brillengläsern bzw. von Brillenglaspaaren beim Vorliegen einer Anisometropie, welche größer als 0,5 dpt, vorzugsweise größer als 1,5 dpt, besonders bevorzugt größer als 3 dpt ist.

Ferner wird gemäß der Erfindung ein Verfahren zur Optimierung und Herstellung eines Brillenglaspaares vorgeschlagen, wobei das Brillenglaspaar zur Korrektur einer Anisometropie D der Augen eines Brillenträgers ausgelegt ist, und wobei zumindest eines der beiden Brillengläser des Brillenglaspaares nach dem oben beschriebenen Verfahren zur Optimierung und Herstellung eines Brillenglases berechnet bzw. optimiert und hergestellt wird.

Ferner wird gemäß der Erfindung ein Computerprogrammerzeugnis oder ein Speichermedium mit einem darauf gespeichertem Computerprogramm bereitgestellt, welches ausgelegt ist, wenn geladen und ausgeführt auf einem Computer, das oben beschriebene erfindungsgemäße Verfahren zur Optimierung zumindest einer der Flächen eines Brillenglases bzw. eines Brillenglaspaares, unter Berücksichtigung einer Anisometropie *D* der Augen des Brillenträgers durchzuführen. Das Verfahren zur Optimierung der zumindest einen Fläche des Brillenglases umfaßt einen Berechnungs- bzw. Optimierungsschritt, welcher derart erfolgt, daß eine Zielfunktion *F* minimiert wird:

$$\min F = \sum_i gP_i((PR(i) - PL(i)) - P_{soll}(i))^2, \qquad (6)$$

wobei:

PR(i)     eine tatsächliche prismatische Wirkung an der i-ten Bewertungsstelle des Brillenglases;

PL(i)     eine prismatische Referenzwirkung an der i-ten Bewertungsstelle des Brillenglases;

$P_{soll}$(i)     einen Sollwert der Differenz $\Delta P$ der prismatischen Wirkung und der prismatischen Referenzwirkung an der i-ten Bewertungsstelle des Brillenglases; und

$gP_i$     eine Gewichtung der prismatischen Wirkung an der i-ten Bewertungsstelle des Brillenglases

bezeichnen;

und wobei die prismatische Referenzwirkung PL(i) die prismatische Wirkung in einem der i-ten Bewertungsstelle korrespondierenden Durchblickpunkt eines zweiten Brillenglases ist und das Brillenglas und das zweite Brillenglas ein Brillenglaspaar zur Korrektur der Anisometropie des Brillenträgers bilden, wobei der Berechnungs- bzw. Optimierungsschritt ferner derart erfolgt, daß die Differenz $\Delta P$ der prismatischen Wirkung des Brillenglases und der prismatischen Referenzwirkung an der i-ten Bewertungsstelle des Brillenglases kleiner als eine obere Grenze ist, und diese Grenze eine Funktion der Anisometropie D und des Abstandes r der i-ten Bewertungsstelle vom Prismenbezugspunkt ist:

$$\Delta P(r) < k * r * D ,$$

wobei k eine Konstante kleiner als 1 ist. Im übrigen wird hinsichtlich des Computerprogrammerzeugnisses auf die obige Beschreibung der erfindungsgemäßen Verfahren verwiesen.

Ferner wird gemäß der Erfindung eine Vorrichtung bereitgestellt, welche derart ausgelegt und eingerichtet ist, das oben beschriebene Verfahren zur Optimierung und Herstellung eines Brillenglases bzw. eines Brillenglaspaares durchzuführen.

Die erfindungsgemäße Vorrichtung zur Herstellung eines Brillenglases bzw. eines Brillenglaspaares umfaßt:

- Erfassungsmittel zum Erfassen von Zieldaten eines Brillenglases bzw. eines Brillenglaspaares;

- Berechnungs- und Optimierungsmittel zum Berechnen und Optimieren zumindest einer Fläche des Brillenglases unter Berücksichtigung einer Anisometropie D der Augen des Brillenträgers, wobei die Berechnungs- bzw. Optimierungsmittel ausgelegt sind, eine Zielfunktion F zu minimieren, so daß

$$\min F = \sum_i gP_i((PR(i) - PL(i)) - P_{soll}(i))^2, \qquad (8)$$

gilt, wobei:

PR(i)     eine tatsächliche prismatische Wirkung an der i-ten Bewertungsstelle des Brillenglases;

PL(i)     eine prismatische Referenzwirkung an der i-ten Bewertungsstelle des Brillenglases;

$P_{soll}$(i)     einen Sollwert der Differenz $\Delta P$ der prismatischen Wirkung und der prismatischen Referenzwirkung an der i-ten Bewertungsstelle des Brillenglases; und

$gP_i$     eine Gewichtung der prismatischen Wirkung an der i-ten Bewertungsstelle des Brillenglases

bezeichnen;

und wobei die prismatische Referenzwirkung PL(i) die prismatische Wirkung in einem der i-ten Bewertungsstelle korrespondierenden Durchblickpunkt eines zweiten Brillenglases ist und das Brillenglas und das zweite Brillenglas ein Brillenglaspaar zur gemeinsamen Verwendung in einer Brille zur Korrektur der Anisometropie des Brillenträgers bilden, wobei die Differenz $\Delta P$ der prismatischen Wirkung des Brillenglases und der prismatischen Referenzwirkung an der i-ten Bewertungsstelle des Brillenglases kleiner als eine obere Grenze ist, und diese Grenze eine Funktion der Anisometropie $D$ und des Abstandes $r$ der $i$-ten Bewertungsstelle vom Prismenbezugspunkt ist:

$$\Delta P(r) < k * r * D,$$

wobei $k$ eine Konstante kleiner als 1 ist.

Brillenglaspaar zur gemeinsamen Verwendung in einer Brille zur Korrektur der Anisometropie des Brillenträgers bilden.

Ein Brillenglaspaar zur Korrektur einer Anisometropie eines Brillenträgers, welches nach dem erfindungsgemäßen Verfahren optimiert worden ist, kann ein erstes Brillenglas, welches zur Korrektur eines Fernpunktrefraktionsdefizits des ersten Auges des Brillenträgers ausgelegt ist, und ein zweites Brillenglas, welches zur Korrektur eines Fernpunktrefraktionsdefizits des zweiten Auges des Brillenträgers ausgelegt ist, umfassen, wobei die Differenz $\Delta P = |PL-PR|$ der prismatischen Wirkungen in den korrespondierenden Durchblickpunkten des ersten und des zweiten Brillenglases kleiner als eine obere Grenze ist und diese Grenze eine Funktion der Differenz $D$ der dioptrischen Wirkung im Prismenreferenzpunkt des ersten Brillenglases und der dioptrischen Wirkung im Prismenreferenzpunkt des zweiten Brillenglases und des Abstandes $r$ des Durchblickpunktes vom Prismenbezugspunkt ist:

$$\Delta P(r) < k * r * D, \tag{9}$$

wobei $k$ eine Konstante kleiner als 1 bezeichnet.

Der Prismenbezugspunkt wird in EN ISO 13 666 definiert. Er befindet sich in der Regel an dem geometrischen Mittelpunkt des ungerandeten bzw. rohrunden Glases bzw. in dem Glasmittelpunkt. Der Glasmittelpunkt ist als derjenige Punkt definiert, welcher sich auf der Mitte der durch die Permanentmarkierungen verlaufenden Glashorizontale befindet. Bei einigen vordezentrierten Brillengläsern kann sich der Prismenbezugspunkt in einem Punkt mit Koordinaten (+/- 2,5 mm, -4 mm) befinden.

Vorzugsweise ist zumindest eine der beiden Flächen des Brillenglases eine asphärische bzw. atorische oder progressive Fläche. Die gegenüberliegende Fläche, welche vorzugsweise die Vorderfläche bzw. die dem Objekt zugewandte Fläche ist, kann eine einfache rotationssymmetrische, insbesondere sphärische Fläche sein.

Weiter bevorzugt ist Differenz $D$ größer als 0,5 dpt, vorzugsweise größer als 1,5 dpt, weiter bevorzugt größer als 3,0 dpt.

Die korrespondierenden Durchblickpunkte des ersten und des zweiten Brillenglases können wie oben beschrieben in Gebrauchsstellung des Brillenglases und des zweiten Brillenglases vor den Augen des Brillenträgers mittels Ray-Tracing unter Annahme der Orthotropie berechnet werden.

Dabei können insbesondere durchschnittliche Parameter (Augendrehpunkt, Eintrittspupille und/oder Hauptebene, etc.) eines Standardauges (wie z.B. dem sogenannten Gullstrand-Auge), einer Standardgebrauchsstellung (Fassungsscheibenwinkel, Vorneigung, Hornhautscheitelabstand, etc.) und/oder eines Standardobjektmodells bzw. einer Standardobjektentfernung berücksichtigt werden, wie in DIN 58 208 Teil 2 definiert.

Eine durchschnittliche Gebrauchssituation ist beispielsweise durch folgende Parameter charakterisiert:

Hornhautscheitelabstand (HSA) = 15,00 mm;
Vorneigung = 8,0 Grad;
Fassungsscheibenwinkel = 0,0 Grad;
Pupillendistanz = 63,0 mm;
Augendrehpunktabstand e = 28,5mm;
Objektabstandmodell: unendlicher Objektabstand im oberen Abschnitt des Brillenglases, welcher fließend in einen Objektabstand von -2,6 dpt bei x = 0 mm, y = -20 mm übergeht.

Bei der Berechnung des Verlaufs des Hauptstrahls und der zugehörigen Wellenfront können jedoch individuelle Parameter des Auges eines Brillenträgers, der individuellen Gebrauchsstellung und/oder dem individuellen Objektentfernungsmodell berücksichtigt werden.

Vorzugsweise beträgt die Konstante $k$ einen Wert von 0,9, vorzugsweise 0,8 für die Differenz der vertikalen prismatischen Wirkungen; und/oder einen Wert von 0,95, vorzugsweise 0,8 für die Differenz der horizontalen prismatischen Wirkungen.

Das erste und das zweite Brillenglas können Einstärkenbrillengläser, Mehrstärkenbrillengläser oder progressive Brillengläser sein.

Wenn die Brillengläser progressive Brillengläser sind, ist es bevorzugt, wenn:

- die Differenz der vertikalen und/oder der horizontalen prismatischen Wirkungen in dem jeweiligen Fernbezugspunkt des ersten und des zweiten Brillenglases kleiner als 1,3 * $D$, vorzugsweise kleiner als 0,8 * $D$ ist; und/oder
- die Differenz der vertikalen und/oder der horizontalen prismatischen Wirkungen im jeweiligen Nahbezugspunkt des ersten und des zweiten Brillenglases kleiner als 1,3* $D$, vorzugsweise kleiner als 1,0* $D$ ist.

Die Fern- und Nahbezugspunkte eines progressiven Brillenglases sind in EN ISO 13 666 definiert. Der Fernbezugspunkt hat beispielsweise Koordinaten (0, +8 mm) und der Nahbezugspunkt Koordinaten (0, -14 mm), wobei sich der Ursprung des Koordinatensystems in dem geometrischen Mittelpunkt (des ungerandeten bzw. rohrunden Brillenglases) bzw. im Glasmittelpunkt des Brillenglases befindet und die Abszisse und die Ordinate jeweils die horizontale bzw. die vertikale Achse des Brillenglases in Gebrauchsstellung bezeichnen.

Die unter Berücksichtigung der Anisometropie eines Brillenträgers optimierten Brillengläser bzw. Brillenglasflächen können z.B. mittels numerisch gesteuerten Werkzeugen aus Mineralglas oder Kunststoff hergestellt werden.

Ferner wird eine erfindungsgemäße Verwendung eines oben beschriebenen erfindungsgemäßen Brillenglaspaares zur Korrektur einer Anisometropie eines Brillenträgers bereitgestellt.

Die Erfindung wird nachfolgend anhand von Ausführungsbeispielen unter Bezugnahme auf die Zeichnungen beispielhaft beschrieben. Es zeigt:

Fig. 1     die Verteilung der vertikalen prismatischen Imbalanzen eines konventionellen Brillenglaspaares von progressiven Gläsern zur Korrektur einer Anisometropie;

Fig. 2     die Verteilung der astigmatischen Imbalanzen des konventionellen Brillenglaspaares von progressiven Brillengläsern zur Korrektur einer Anisometropie;

Fig. 3     die Verteilung der vertikalen prismatischen Imbalanzen eines erfindungsgemäßen Brillenglaspaares von progressiven Brillengläsern zur Korrektur einer Anisometropie;

Fig. 4     die Verteilung der astigmatischen Imbalanzen des erfindungsgemäßen Brillenglaspaares von progressiven Brillengläsern zur Korrektur einer Anisometropie;

Fig.5     die Verteilung der vertikalen prismatischen Imbalanzen eines konventionellen Brillenglaspaares von Einstärkenbrillengläsern zur Korrektur einer Anisometropie;

Fig. 6     die Verteilung der astigmatischen Imbalanzen des konventionellen Brillenglaspaares von Einstärkenbrillengläsern zur Korrektur einer Anisometropie;

Fig. 7     die Verteilung der vertikalen prismatischen Imbalanzen eines erfindungsgemäßen Brillenglaspaares von Einstärkenbrillengläsern zur Korrektur einer Anisometropie;

Fig. 8     die Verteilung der astigmatischen Imbalanzen des erfindungsgemäßen Brillenglaspaares von Einstärkenbrillengläsern zur Korrektur einer Anisometropie;

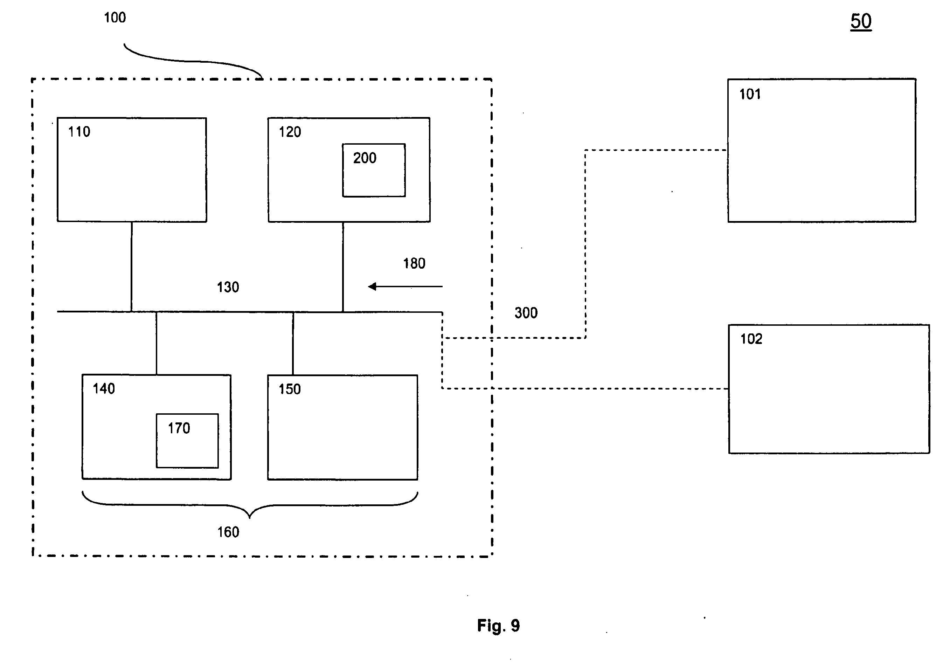

Fig. 9     eine schematische Darstellung eines Beispiels der bevorzugten Vorrichtung zum Berechnen der lokalen Vergrößerung und/oder der lokalen Verzerrung eines Brillenglases und/oder zum Berechnen bzw. zur Optimierung der zumindest einen Fläche des Brillenglases.

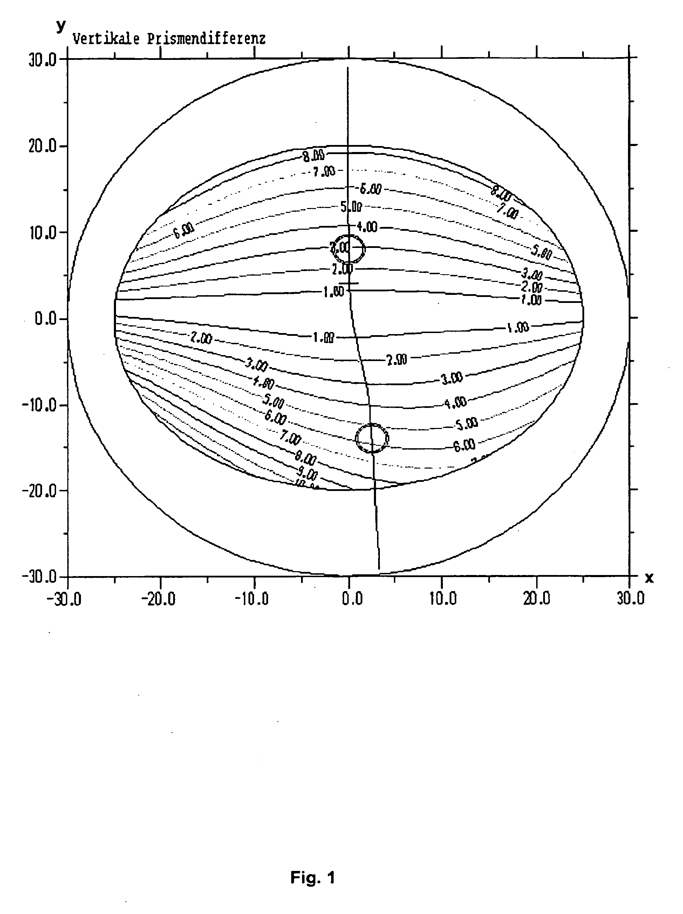

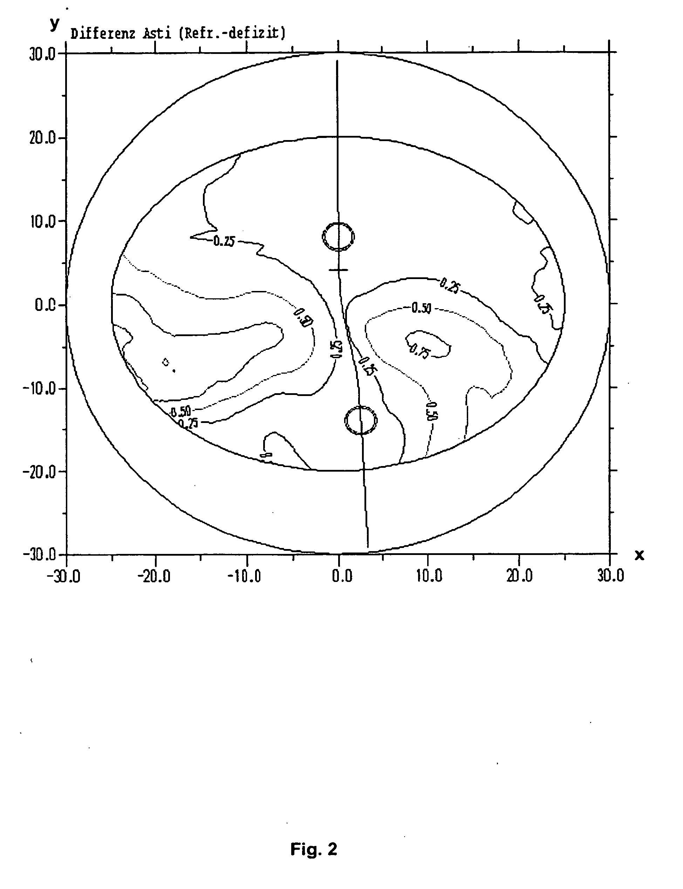

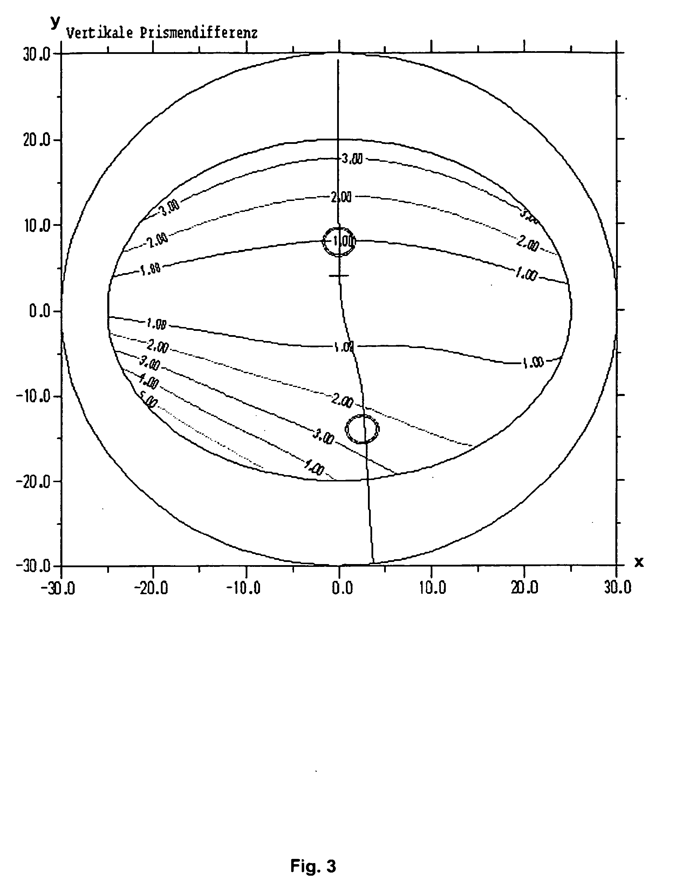

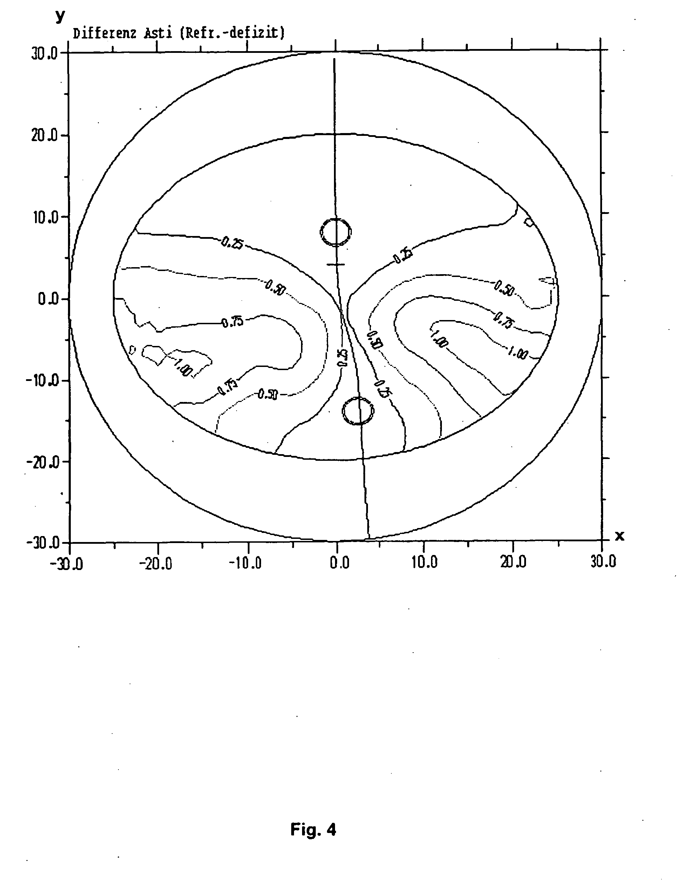

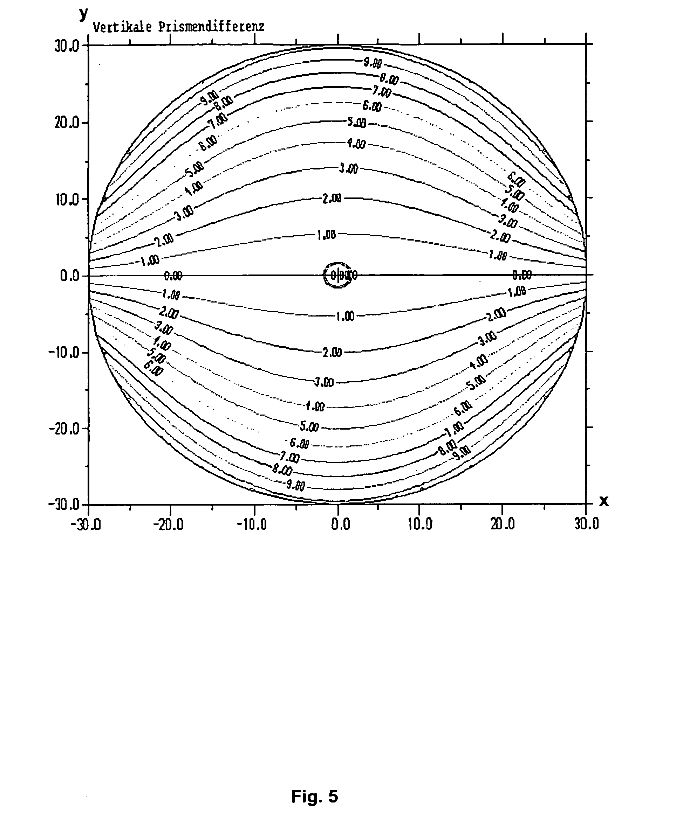

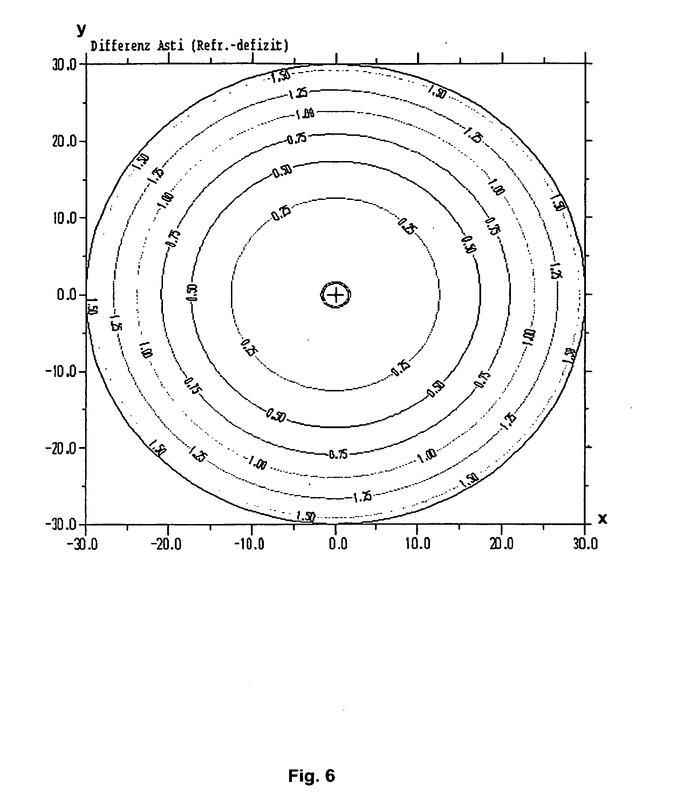

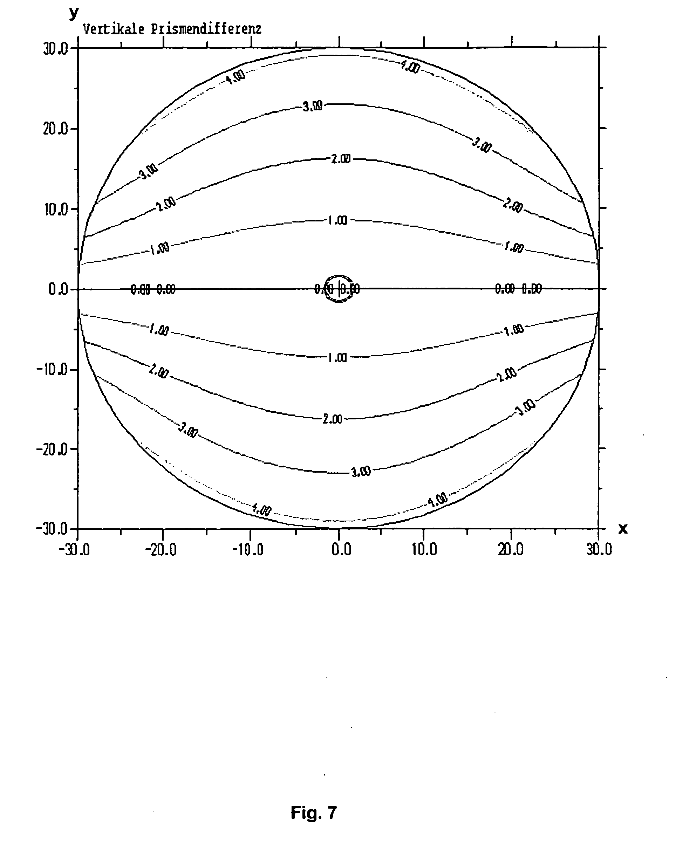

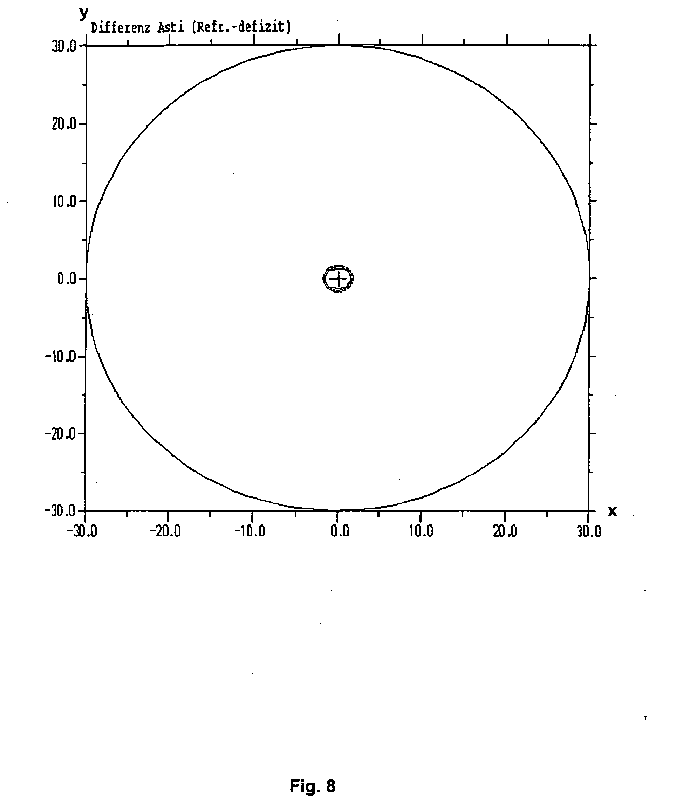

Fig. 1 bis 8 zeigen die Verteilungen der jeweils prismatischen und astigmatischen Imbalanzen eines konventionellen Brillenglaspaares von progressiven Gläsern (Fig. 1 und 2) oder Einstärkenbrillengläsern (Fig. 5, 6) und eines erfindungsgemäßen Brillenglaspaares von progressiven Gläsern (Fig. 3 und 4) oder Einstärkenbrillengläsern (Fig. 7, 8) als Iso- bzw. Konturlinien gleichen Werts.

Die vertikalen prismatischen Imbalanzen stellen die Differenz der vertikalen prismatischen Wirkungen an den jeweiligen korrespondierenden Durchblickpunkten des rechten und des linken Brillenglases des Brillenglaspaares dar.

Die astigmatischen Imbalanzen stellen die Differenz der astigmatischen Abweichungen an den jeweiligen korrespondierenden Durchblickpunkten des rechten und des linken Brillenglases des Brillenglaspaares dar (berechnet mittels der Kreuzzylinder-Methode).

Die korrespondierenden Durchblickpunkte des linken und des rechten Brillenglases können wie eingangs beschrieben mittels Ray-Tracing unter Annahme der Orthotropie in Gebrauchsstellung der Brillengläser vor den Augen des Brillenträgers ermittelt werden.

Alle Figuren 1 bis 8 sind auf ein kartesisches Koordinatensystem bezogen, das tangential zur Vorderfläche des rechten Brillenglases liegt und dessen Ursprung sich in Nullblickrichtung vor dem rechten Auge befindet. Die x-y-Ebene ist tangential zur Vorderfläche im Prismenbezugspunkt bzw. geometrischen Mittelpunkt; alle Koordinatenwerte x und y sind in mm angegeben.

In allen Figuren 1 bis 4 sind das rechte Brillenglas zur Korrektur eines Fernpunktrefraktionsdefizits von Rsph = +2,0 dpt (rechts) und das zweite Brillenglas zur Korrektur eines Fernpunktrefraktionsdefizits von Lsph = +5,0 dpt (links) ausgelegt. Die Anisometropie des Brillenträgers beträgt 3 dpt. Beide Brillengläser sind progressive Brillengläser und weisen eine Addition von 2,0 dpt auf.

In Fig. 1 bis 4 sind die jeweiligen Fern- und Nahbezugspunkte als Kreise dargestellt. Gemessen in einem Koordinatensystem der Vorderfläche mit einem Ursprung in dem geometrischen Mittelpunkt des Brillenglases und mit einer X-Y Ebene tangential zur Vorderfläche, wobei die x-Achse die horizontale Achse und die y-Achse die vertikale Achse bezeichnet, befindet sich bei allen in Fig. 1 bis 4 dargestellten Brillengläsern der Fernbezugspunkt in einem Punkt mit Koordinaten (0, +8 mm) und der Nahbezugspunkt in einem Punkt mit Koordinaten (0, -14 mm).

Fig. 1 zeigt die Verteilung des absoluten Betrags der vertikalen prismatischen Imbalanzen eines herkömmlichen Brillenglaspaares für eine Korrektur einer Anisometropie von +3 dpt. Die dem zu betrachtenden Objekt zugewandte Vorderfläche des linken und rechten Brillenglases des konventionellen Brillenglaspaares ist eine sphärische Fläche mit einem Krümmungsradius von 80,7 mm. Die den Augen des Brillenträgers zugewandte Rückfläche ist eine progressive Fläche, welche nach einem herkömmlichen Optimierungsverfahren hinsichtlich der astigmatischen Fehler und Refraktionsfehler optimiert ist. Der Brechungsindex des jeweils linken und rechten Brillenglases des konventionellen Brillenglaspaares beträgt 1,597.

Wie aus Fig. 1 ersichtlich ist, ergeben sich bei einem solchen konventionellen Brillenglaspaar progressiver Brillengläser sehr starke vertikale prismatische Imbalanzen bei einer Anisometropie von 3 dpt.

Maximal treten Werte von über 12 cm/m und in den Bezugspunkten (Fern- und Nahbezugspunkte) Werte von 2 und 6 cm/m auf. Bei derart großen prismatischen Imbalanzen werden die durch das linke und rechte Brillenglas erzeugten Bilder nicht mehr als ein einfaches Bild gesehen.

Fig. 2 zeigt die Verteilung der astigmatischen Imbalanzen des in Fig. 1 dargestellten konventionellen Brillenglaspaares. Wie aus Fig. 2 ersichtlich ist, ist der maximale Wert der auftretenden astigmatischen Imbalanzen unter 0,5 dpt.

In Fig. 3 ist die Verteilung der vertikalen prismatischen Imbalanzen eines bevorzugten erfindungsgemäßen Brillenglaspaares, welches unter Berücksichtigung einer Anisometropie hinsichtlich der prismatischen Imbalanzen optimiert ist, dargestellt. Sowohl das rechte als auch das linke Brillenglas weist jeweils eine sphärische Vorderfläche mit einem Krümmungsradius von 80,7 mm und eine progressive Rückfläche auf. Die progressive Fläche des rechten Brillenglases ist erfindungsgemäß unter Berücksichtigung der prismatischen Imbalanzen optimiert worden. Der Brechungsindizien des linken und des rechten Brillenglases des erfindungsgemäßen Brillenglaspaares betragen 1,597.

Wie aus Fig. 3 ersichtlich ist, sind die auftretenden vertikalen prismatischen Imbalanzen deutlich reduziert. So ergeben sich in den Bezugspunkten nur noch Werte von jeweils 1 cm/m (im Fernbezugspunkt) und 2,5 cm/m (im Nahbezugspunkt). Der maximale Wert der auftretenden vertikalen prismatischen Imbalanzen ist 5,5 cm/m. Im Vergleich zu einem konventionellen Brillenglaspaar sind die vertikalen Imbalanzen um mehr als die Hälfte reduziert worden.

Fig. 4 zeigt die Verteilung der astigmatischen Imbalanzen des in Fig. 3 dargestellten progressiven Brillenglaspaares.

Wie aus Fig. 4 ersichtlich ist, sind die astigmatischen Imbalanzen eines erfindungsgemäßen Brillenglaspaares im Vergleich zu einem konventionellen Brillenglaspaar geringfügig erhöht. So liegen die astigmatischen Imbalanzen in den Fern- und Nahbezugspunkten unter einem Wert von 0,25 dpt. Der maximal auftretende Wert der astigmatischen Imbalanzen ist ungefähr 1,0 dpt.

Fig. 5 bis 8 zeigen Einstärkenbrillenglaspaare zur Korrektur einer Anisometropie.

In Figuren 5 bis 8 sind das rechte Einstärkenbrillenglas zur Korrektur eines Fernpunktrefraktionsdefizits von Rsph = +3,5 dpt (rechts) und das zweite Einstärkenbrillenglas zur Korrektur eines Fernpunktrefraktionsdefizits von Lsph = +5,0 dpt (links) ausgelegt. Die Anisometropie des Brillenträgers beträgt somit 1,5 dpt.

Fig. 5 zeigt die Verteilung des absoluten Betrags der vertikalen prismatischen Imbalanzen eines herkömmlichen Einstärkenbrillenglaspaares zur Korrektur einer Anisometropie von 1,5 dpt.

Das linke und das rechte Brillenglas des konventionellen Einstärkenbrillenglaspaares weisen jeweils sphärische Vorder- und Rückflächen auf, wobei der Krümmungsradius der Vorderflächen beider Brillengläser jeweils 80,7 mm beträgt. Der Krümmungsradius der Rückfläche des rechten Brillenglases beträgt 146,5 mm, der Krümmungsradius der Rückfläche des linken Brillenglases 219,2 mm. Der Brechungsindex beider Brillengläser beträgt 1,597.

Wie aus Fig. 5 ersichtlich ist, ergeben sich bei einem solchen konventionellen Paar von Einstärkenbrillengläser im Falle einer Anisometropie von 1,5 dpt sehr starke vertikale prismatische Imbalanzen. Maximal treten Werte von über 9 cm/m, was die Fusion der Seheindrucke des rechten und des linken Brillenglases erheblich erschwert.

Fig. 6 zeigt die Verteilung der astigmatischen Imbalanzen des in Fig. 5 dargestellten konventionellen Einstärkenbrillenglaspaares. Wie aus Fig. 6 ersichtlich ist, ist der maximale Wert der auftretenden astigmatischen Imbalanzen ungefähr 1,5 dpt.

In Fig. 7 ist die Verteilung der vertikalen prismatischen Imbalanzen eines bevorzugten erfindungsgemäßen Einstärkenbrillenglaspaares, welches unter Berücksichtigung einer Anisometropie hinsichtlich der prismatischen Imbalanzen optimiert ist, dargestellt. Beider Brillengläser des erfindungsgemäßen Paares weisen jeweils eine sphärische Vorderfläche mit einem Krümmungsradius von 80,7 mm und eine erfindungsgemäß optimierte asphärische Rückfläche auf. Der Brechungsindex beider Brillengläser beträgt 1,597.

Wie aus Fig. 7 ersichtlich ist, sind die auftretenden vertikalen prismatischen Imbalanzen gegenüber derjenigen eines konventionellen Brillenglaspaares deutlich reduziert. Der maximale Wert der auftretenden vertikalen prismatischen Imbalanzen in der Peripherie des Brillenglases beträgt lediglich ungefähr 4,00 cm/m. In einem Kreis um den Prismenbezugspunkt bzw. um den geometrischen Mittelpunkt mit einem Durchmesser von ungefähr 20 mm beträgt der Wert der maximal auftretenden vertikalen prismatischen Imbalanzen 1,0 cm/m. In einem Kreis mit einem Durchmesser von ungefähr 30 mm liegt der Wert der maximal auftretenden vertikalen prismatischen Imbalanzen unter 2,0 cm/m.

Fig. 8 zeigt die Verteilung der astigmatischen Imbalanzen des in Fig. 7 dargestellten bevorzugten erfindungsgemäßen Einstärkenbrillenglaspaares. Wie aus Fig. 8 ersichtlich ist, sind die astigmatischen Imbalanzen eines erfindungsgemäßen Einstärkenbrillenglaspaares im Vergleich zu einem konventionellen Einstärkenbrillenglaspaar ebenfalls erheblich reduziert.

Das erfindungsgemäße Brillenglaspaar zur Korrektur einer Anisometropie eines Brillenträgers kann beispielsweise mittels des nachfolgend beschriebenen Verfahrens hergestellt werden.

Das Verfahren umfaßt einen Berechnungs- bzw. Optimierungsschritt zumindest einer Fläche eines der Brillengläser des Brillenglaspaares (z.B. des rechten Brillenglases) unter Berücksichtigung einer Anisometropie des Brillenträgers, welcher derart erfolgt, daß eine Zielfunktion F minimiert wird.

Eine Zielfunktion hat normalerweise folgende Gestalt:

$$\min F = \sum ga_i (A_{ist}(i) - A_{soll}(i))^2 + gb_i (B_{ist}(i) - B_{soll}(i))^2 ..... \tag{10}$$

Hierbei beziehen sich A und B auf monokulare Sollwerte und Abbildungsfehler an der *i*-ten Bewertungsstelle des Brillenglases. In der Regel werden zwei Kriterien bzw. Eigenschaften des Brillenglases verwendet: *A* = Astigmatismus und *B* = Brechwert (als Flächenwerte oder als Gebrauchswerte).

In Formel (10) bezeichnen:

$A_{ist}(i)$     ein tatsächliches monokulares Merkmal *A* (z.B. Astigmatismus) an der i-ten Bewertungsstelle;
$A_{soll}(i)$     ein gefordertes monokulares Merkmal *A* an der *i*-ten Bewertungsstelle
$ga_i$     eine Gewichtung des monokularen Merkmales *A* an der *i*-ten Bewertungsstelle;
$B_{ist}(i)$     ein tatsächliches monokulares Merkmal *B* (z.B. Brechwert) an der *i*-ten Bewertungsstelle;
$B_{soll}(i)$     ein gefordertes monokulares Merkmal *B* an der *i*-ten Bewertungsstelle; und
$gb_i$     eine Gewichtung des monokularen Merkmales *B* an der *i*-ten Bewertungsstelle.

Gemäß einer bevorzugten Ausführungsform der Erfindung wird die Zielfunktion derart erweitert, daß ebenfalls die Differenz der prismatischen Wirkung des zu optimierenden Brillenglases und eines zweiten Brillenglases mit einer von dem ersten Brillenglas unterschiedlichen dioptrischen Wirkung an der *i*-ten Bewertungsstelle berücksichtigt wird.

Die so erweiterte Zielfunktion kann beispielsweise die folgende Form annehmen:

$$\min F = \sum ga_i (A_{ist}(i) - A_{soll}(i))^2 + gb_i (B_{ist}(i) - B_{soll}(i))^2_i +$$
$$+ gPv_i ((PvR(i) - PvL(i)) - Pv_{soll}(i))^2 + gPh_i ((PhR(i) - PhL(i)) - Ph_{soll}(i))^2 \tag{11}$$

wobei:

$A_{ist}(i)$     ein tatsächliches monokulares Merkmal *A* (z.B. Astigmatismus) an der *i*-ten Bewertungsstelle;

$A_{soll}(i)$     ein gefordertes monokulares Merkmal *A* an der *i*-ten Bewertungsstelle;

$ga_i$     Gewichtung des monokularen Merkmales *A* an der *i*-ten Bewertungsstelle;

$B_{ist}(i)$     ein tatsächliches monokulares Merkmal *B* (z.B. Brechwert oder der Refraktionsfehler) an der *i*-ten Bewertungsstelle;

$B_{soll}(i)$     ein gefordertes monokulares Merkmal *B* an der *i*-ten Bewertungsstelle;

$gb_i$      eine Gewichtung des monokularen Merkmales *B* an der *i*-ten Bewertungsstelle;

*PvR(i)*      die tatsächliche vertikale prismatische Wirkung *Pv* im rechten Brillenglas an der *i*-ten Bewertungsstelle;

*PvL(i)*      die tatsächliche vertikale prismatische Wirkung *Pv* im linken Brillenglas am korrespondierenden Durchblickpunkt der *i*-ten Bewertungsstelle;

$Pv_{soll}(i)$      geforderte vertikale prismatische Differenz an der *i*-ten Bewertungsstelle;

$gPv_i$      Gewichtung des vertikalen Prismas *Pv* an der *i*-ten Bewertungsstelle;

*PhR(i)*      die tatsächliche horizontale prismatische Wirkung *Ph* im rechten Brillenglas an der *i*-ten Bewertungsstelle; ,

*PhL(i)*      die tatsächliche horizontale prismatische Wirkung *Ph* im linken Brillenglas am korrespondierenden Durchblickpunkt der *i*-ten Bewertungsstelle;

$Ph_{soll}(i)$      geforderte horizontale prismatische Differenz an der *i*-ten Bewertungsstelle; und

$gPh_i$      Gewichtung des horizontalen Prismas *Ph* an der *i*-ten Bewertungsstelle

bezeichnen.

Die in Formel (11) eingehenden Größen können wie folgt berechnet werden:

Die Gewichte $ga_i$, $gb_i$, $gPv_i$, $gPh_i$ liegen jeweils vorzugsweise in einem Bereich zwischen 0,01 und 100.

Zunächst werden der Verlauf eines Hauptstrahls und die zugehörige Wellenfront ermittelt. Der Hauptstrahl verläuft vom Augendrehpunkt des rechten Auges durch einen Punkt auf der Vorderfläche des rechten Brillenglases zu einem vorgegebenen Objektpunkt. Der Hauptstrahl kann mittels Ray-Tracing berechnet werden.

Aus den Daten der berechneten Wellenfront und der Verordnung des rechten Auges werden die astigmatische Abweichung und der Refraktionsfehler auf allgemein bekannte Weise berechnet. Anschließend wird vom Objektpunkt unter der Annahme schneidender Fixierlinien (Orthotropie) der Hauptstrahl und die Wellenfront durch das linke Brillenglases und den linken Augendrehpunkt iteriert.

Die Durchblickpunkte des rechten und linken Brillenglases entsprechen den Durchstoßpunkten des Hauptstrahls mit der Vorder- oder Rückfläche des jeweils rechten und linken Brillenglases.

Bei der Berechnung bzw. Optimierung des in Fig. 3 und 4 gezeigten Brillenglaspaares wurde folgende durchschnittliche Gebrauchssituation berücksichtigt:

Eine durchschnittliche Gebrauchssituation ist beispielsweise durch folgende Parameter charakterisiert:

Hornhautscheitelabstand (HSA) = 15,00 mm;
Vorneigung = 8,0 Grad;
Fassungsscheibenwinkel = 0,0 Grad;
Pupillendistanz = 63,0 mm;
Augendrehpunktabstand e = 28,5mm;
Objektabstandmodell: unendlicher Objektabstand im oberen Abschnitt des Brillenglases, welcher fließend in einen Objektabstand von -2,6 dpt bei x = 0 mm, y = -20 mm übergeht.

Die astigmatische Abweichung und der Refraktionsfehler der Wellenfront durch das linke Brillenglas werden mit den entsprechenden Werten des rechten Glases kombiniert und ergeben so die Größen der astigmatischen Differenz (nach der Methode der schief gekreuzten Zylinder) und das Refraktionsgleichgewicht (Absolutbetrag der Differenz der mittleren Wirkung der Brillengläser). Die vertikale Prismendifferenz ergibt sich, indem man die augenseitigen Hauptstrahlen in die Zyklopenaugenebene projiziert und den Winkel zwischen den Geraden in cm/m ausdrückt.

In dem oben beschriebenen Verfahren zur Herstellung eines Brillenglaspaares erfolgt die erfindungsgemäße Optimierung des Brillenglases bzw. eines Brillenglaspaares monokular. Dabei wird lediglich ein Brillenglas zu einem vorgegebenen zweiten (linken) Brillenglas iterativ optimiert.

Selbstverständlich ist es jedoch möglich, daß die beiden Brillengläser eines Brillenglaspaares zur Korrektur einer Anisometropie nach dem erfindungsgemäßen Verfahren unter Berücksichtigung der durch die Anisometropie bedingten prismatischen Imbalanzen iterativ optimiert werden.

Das linke und das rechte Brillenglas können in einer durchschnittlichen oder individuell auf einen Brillenträger abgestimmten Gebrauchssituation angeordnet werden. Die bei der Berechnung des Hauptstrahls und der zugehörigen Wellenfront eingehenden Daten des zweiten Brillenglases (Brechungsindex, Pfeilhöhen der Vorder- und Rückfläche) können theoretische Daten oder Messdaten sein, welche durch Vermessung der Pfeilhöhen des (z.B.) linken Brillenglases mittels Abtastvorrichtungen oder einem Interferometer gewonnen werden. Die Vermessung erfolgt vorzugsweise in den Punkten eines Rasters, welche in einem vorgegebenen Abstand liegen. Die vollständige Fläche kann dann z.B. mittels Spline-Funktionen rekonstruiert werden. Dadurch wird ermöglicht, daß etwaige herstellungsbedingte Abweichungen der Pfeilhöhen ebenfalls bei der Berechnung bzw. Optimierung des Brillenglases berücksichtigt werden können.

Es ist ferner möglich, die Rezeptdaten der Brillengläser vorzugsweise zusammen mit individuellen Daten des Brillenträgers (einschließlich der Daten der individuellen Gebrauchssituation) und/oder Daten des Brillenglases (Brechungsindex, Pfeilhöhen der Vorder- und Rückfläche) vorzugsweise per Datenfernübertragung an eine erfindungsgemäße Vorrichtung zur Herstellung eines Brillenglases zu übermitteln. Die Optimierung des Brillenglases unter Berücksichtigung der Anisometropie des Brillenträgers erfolgt aufgrund der übermittelten Rezeptdaten und individuellen Daten.

Die unter Berücksichtigung der Anisometropie eines Brillenträgers optimierten Brillengläser bzw. Brillenglasflächen können z.B. mittels numerisch gesteuerter Werkzeuge aus Mineralglas oder Kunststoff hergestellt werden.

Wie schematisch in Figur 5 dargestellt ist, wird ferner ein Computerprogrammerzeugnis (d.h. ein in der Patentanspruchskategorie einer Vorrichtung beanspruchtes Computerprogramm) 200 bereitgestellt, welches derart ausgelegt ist, daß es - wenn geladen und ausgeführt auf einem geeigneten Computer 100 bzw. Netzwerk - ein Verfahren zur Optimierung eines Brillenglases bzw. eines Brillenglaspaares unter Berücksichtigung einer Anisometropie eines Brillenträgers durchführen kann. Das Computerprogrammerzeugnis 200 kann auf einem körperlichen Speichermedium bzw. Programmträger 210 gespeichert werden. Das Computerprogrammerzeugnis kann ferner als Programmsignal vorliegen.

Unter Bezugnahme auf Figur 5 wird nachfolgend eine mögliche Computer- bzw. Netzwerkarchitektur beschrieben.

Der Prozessor 110 des Computers 100 ist beispielsweise ein Zentralprozessor (CPU), ein Mikrocontroller (MCU), oder ein digitaler Signalprozessor (DSP). Der Speicher 120 symbolisiert Elemente, die Daten und Befehle entweder zeitlich begrenzt oder dauerhaft speichern. Obwohl zum besseren Verständnis der Speicher 120 als Teil des Computers 100 gezeigt ist, kann die Speicherfunktion an anderen Stellen, z.B im Prozessor selbst (z.B. Cache, Register) und/oder auch im Netzwerk 300, beispielsweise in den Computern 101/102 implementiert werden. Der Speicher 120 kann ein Read-Only-Memory (ROM), ein Random-Access-Memory (RAM), ein programmierbares oder nicht-programmierbares PROM oder ein Speicher mit anderen Zugriffsoptionen sein. Der Speicher 120 kann physisch auf einem computerlesbaren Programmträger, zum Beispiel auf:

    (a) einem magnetischen Träger (Festplatte, Diskette, Magnetband);
    (b) einem optischen Träger (CD-ROM, DVD);
    (c) einem Halbleiterträger (DRAM, SRAM, EPROM, EEPROM);

implementiert bzw. gespeichert werden.

Wahlweise ist der Speicher 120 über verschiedene Medien verteilt. Teile des Speichers 120 können fest oder austauschbar angebracht sein. Zum Lesen und Schreiben benutzt der Computer 100 bekannte Mittel wie z.B. Diskettenlaufwerke, etc.

Der Speicher 120 speichert Unterstützungskomponenten wie zum Beispiel ein Bios (Basic Input Output System), ein Betriebssystem (OS), eine Programmbibliothek, einen Compiler, einen Interpreter und/oder ein Tabellen- bzw. Textverarbeitungsprogramm. Diese Komponenten sind zum besseren Verständnis nicht dargestellt. Unterstützungskomponenten sind kommerziell verfügbar und können auf dem Computer 100 von Fachleuten installiert bzw. in diesem implementiert werden.

Der Prozessor 110, der Speicher 120, die Eingabe- und die Ausgabevorrichtung sind über zumindest einen Bus 130 verbunden und/oder wahlweise über das (mono-, bi- bzw. multidirektionale) Netzwerk 300 (z.B. das Internet) angeschlossen bzw. stehen miteinander in Verbindung. Der Bus 130 sowie das Netzwerk 300 stellen logische und/oder physische Verbindungen dar, die sowohl Befehle als auch Datensignale übertragen. Die Signale innerhalb des Computers 100 sind überwiegend elektrische Signale, wohingegen die Signale im Netzwerk elektrische, magnetische und/oder optische Signale oder auch drahtlose Funksignale sein können.

Netzwerkumgebungen (wie das Netzwerk 300) sind in Büros, untemehmensweiten Computemetzwerken, Intranets und im Internet (d.h. World Wide Web) üblich. Die physische Entfernung zwischen den Computern im Netzwerk ist ohne Bedeutung. Das Netzwerk 300 kann ein drahtloses oder ein verdrahtetes Netzwerk sein. Als mögliche Beispiele für Implementierungen des Netzwerks 300 seien hier angeführt: ein lokales Netzwerk (LAN), ein kabelloses lokales Netzwerk (WLAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung. Übertragungsprotokolle und Datenformate sind bekannt. Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language), Wireless Application Protocol (WAP) usw.

Die Eingabe- und Ausgabevorrichtungen können Teil einer Benutzerschnittstelle 160 sein.

Die Eingabevorrichtung 140 steht für eine Vorrichtung, die Daten und Anweisungen zur Verarbeitung durch den Computer 100 bereitstellt. Beispielsweise ist die Eingabevorrichtung 140 eine Tastatur, eine Zeigevorrichtung (Maus, Trackball, Cursorpfeile), Mikrofon, Joystick, Scanner. Obwohl es sich bei den Beispielen allesamt um Vorrichtungen mit menschlicher Interaktion, vorzugsweise durch eine graphische Benutzerschnittstelle, handelt, kann die Vorrichtung 140 auch ohne menschliche Interaktion auskommen, wie zum Beispiel ein drahtloser Empfänger (z.B. mittels Satelliten- oder terrestrischer Antenne), ein Sensor (z.B. ein Thermometer), ein Zähler (z.B. ein Stückzahlzähler in einer Fabrik). Die Eingabevorrichtung 140 kann zum Lesen des Speichermediums bzw. Trägers 170 verwendet werden.

Die Ausgabevorrichtung 150 bezeichnet eine Vorrichtung, die Anweisungen und Daten anzeigt, die bereits verarbeitet wurden. Beispiele dafür sind ein Monitor oder eine anderer Anzeige (Kathodenstrahlröhre, Flachbildschirm, Flüssigkristallanzeige, Lautsprecher, Drucker, Vibrationsalarm). Ähnlich wie bei der Eingabevorrichtung 140 kommuniziert die Ausgabevorrichtung 150 bevorzugt mit dem Benutzer, vorzugsweise durch eine graphische Benutzerschnittstelle. Die Ausgabevorrichtung kann ebenfalls mit anderen Computern 101, 102, etc. kommunizieren.

Die Eingabevorrichtung 140 und die Ausgabevorrichtung 150 können in einer einzigen Vorrichtung kombiniert werden. Beide Vorrichtungen 140, 150 können wahlweise bereitgestellt werden.

Das Computerprogrammerzeugnis bzw. -produkt 200 umfaßt Programminstruktionen und wahlweise Daten, die den Prozessor 110 unter anderem dazu veranlassen, die Verfahrensschritte des Verfahrens gemäß der Erfindung oder bevorzugte Ausführungsformen hiervon auszuführen. Mit anderen Worten definiert das Computerprogramm 200 die Funktion des Computers 100 und dessen Interaktion mit dem Netzwerksystem 300. Das Computerprogrammerzeugnis 200 kann beispielsweise als Quellcode in einer beliebigen Programmiersprache und/oder als Binärcode in kompilierter Form (d.h. maschinenlesbarer Form) vorliegen. Ein Fachmann ist in der Lage, das Computerprogrammerzeugnis 200 in Verbindung mit jeder der zuvor erläuterten Unterstützungskomponente (z.B. Compiler, Interpreter, Betriebssystem) zu benutzen.

Obwohl das Computerprogrammerzeugnis 200 als im Speicher 120 gespeichert dargestellt ist, kann das Computerprogrammerzeugnis 100 aber auch an beliebig anderer Stelle (z.B. auf dem Speichermedium bzw. Programmträger 170) gespeichert sein.

Das Speichermedium 170 ist beispielhaft als außerhalb des Computers 100 angeordnet dargestellt. Um das Computerprogrammerzeugnis 200 auf den Computer 100 zu übertragen, kann das Speichermedium 170 in das Eingabegerät 140 eingeführt werden. Das Speichermedium 170 kann als ein beliebiger, computerlesbarer Träger implementiert werden, wie zum Beispiel als eines der zuvor erläuterten Medien (vgl. Speicher 120). Das Programmsignal 180, welches vorzugsweise über das Netzwerk 300 zum Computer 100 übertragen wird, kann ebenfalls das Computerprogrammerzeugnis 200 beinhalten bzw. ein Teil hiervon sein.

Schnittstellen zum Koppeln der einzelnen Komponenten des Computersystems 50 sind ebenfalls bekannt. Zur Vereinfachung sind die Schnittstellen nicht dargestellt. Eine Schnittstelle kann beispielsweise eine serielle Schnittstelle, eine parallele Schnittstelle, ein Gameport, ein universeller serieller Bus (USB), ein internes oder externes Modem, ein Grafikadapter und/oder eine Soundkarte aufweisen.

Die unter Berücksichtigung der Anisometropie eines Brillenträgers optimierten Brillengläser bzw. Brillenglasflächen können z.B. mittels numerisch gesteuerter Werkzeuge aus Mineralglas oder Kunststoff hergestellt werden.

**Bezugszeichenliste**

| | |
|---|---|
| 50 | Computersystem |
| 100, 10q | Computer |
| 110 | Prozessor |
| 120 | Speicher |
| 130 | Bus |
| 140 | Eingabevorrichtung |

| 150 | Ausgabevorrichtung |
|-----|--------------------|
| 160 | Benutzerschnittstelle |
| 170 | Speichermedium |
| 180 | Programmsignal |
| 200 | Computerprogrammerzeugnis |
| 300 | Netzwerk |

**Patentansprüche**

1. Verfahren zur Optimierung und Herstellung eines Brillenglases, umfassend einen Berechnungs- bzw. Optimierungsschritt zumindest einer der Flächen des Brillenglases unter Berücksichtigung einer Anisometropie $D$ der Augen eines Brillenträgers,
wobei der Berechnungs- bzw. Optimierungsschritt derart erfolgt, daß eine Zielfunktion $F$ minimiert wird:

$$\min F = \sum_i gP_i((PR(i) - PL(i)) - P_{soll}(i))^2 \, ,$$

wobei:

> $PR(i)$ eine prismatische Wirkung an der $i$-ten Bewertungsstelle des Brillenglases;
> $PL(i)$ eine prismatische Referenzwirkung an der $i$-ten Bewertungsstelle des Brillenglases;
> $P_{soll}(i)$ einen Sollwert der Differenz $\Delta P$ der prismatischen Wirkung $PR(i)$ und der prismatischen Referenzwirkung $PL(i)$ an der $i$-ten Bewertungsstelle des Brillenglases; und
> $gP_i$ eine Gewichtung der prismatischen Wirkung an der $i$-ten Bewertungsstelle des Brillenglases

bezeichnen;
wobei die prismatische Referenzwirkung $PL(i)$ die prismatische Wirkung in einem der $i$-ten Bewertungsstelle korrespondierenden Durchblickpunkt eines zweiten Brillenglases ist, und das Brillenglas und das zweite Brillenglas ein Brillenglaspaar zur gemeinsamen Verwendung in einer Brille zur Korrektur der Anisometropie des Brillenträgers bilden, und
wobei der Berechnungs- bzw. Optimierungsschritt ferner derart erfolgt, daß die Differenz $\Delta P$ der prismatischen Wirkung des Brillenglases und der prismatischen Referenzwirkung an der $i$-ten Bewertungsstelle des Brillenglases kleiner als eine obere Grenze ist, und diese Grenze eine Funktion der Anisometropie $D$ und des Abstandes $r$ der $i$-ten Bewertungsstelle vom Prismenbezugspunkt ist:

$$\Delta P(r) < k * r * D \, ,$$

wobei $k$ eine Konstante kleiner als 1 ist.

2. Verfahren nach Anspruch 1, wobei der Berechnungs- bzw. Optimierungsschritt derart erfolgt, daß die Differenz der vertikalen prismatischen Wirkung und der vertikalen prismatischen Referenzwirkung in der Zielfunktion $F$ berücksichtigt wird:

$$\min F = \sum_i gPv_i((PvR(i) - PvL(i)) - Pv_{soll}(i))^2 \, ,$$

wobei:

$PvR(i)$ eine vertikale prismatische Wirkung an der $i$-ten Bewertungsstelle des Brillenglases;
$PvL(i)$ eine vertikale prismatische Referenzwirkung an der $i$-ten Bewertungsstelle des Brillenglases;
$Pv_{soll}(i)$ einen Sollwert der Differenz $\Delta Pv$ der vertikalen prismatischen Wirkung und der vertikalen prismatischen Referenzwirkung an der $i$-ten Bewertungsstelle des Brillenglases; und
$gPv_i$ eine Gewichtung der vertikalen prismatischen Wirkung an der $i$-ten Bewertungsstelle des Brillenglases

bezeichnen.

3. Verfahren nach Anspruch 2, wobei der Berechnungs- bzw. Optimierungsschritt derart erfolgt, daß zusätzlich die Differenz der horizontalen prismatischen Wirkung und der horizontalen prismatischen Referenzwirkung in der Zielfunktion $F$ berücksichtigt wird:

$$\min F = \sum_{i=1}^{N} gPv_i((PvR(i) - PvL(i)) - Pv_{soll}(i))^2 + gPh_i((PhR(i) - PhL(i)) - Ph_{soll}(i))^2 ,$$

wobei:

$PhR(i)$ eine horizontale prismatische Wirkung an der $i$-ten Bewertungsstelle des Brillenglases;
$PhL(i)$ eine horizontale prismatische Referenzwirkung an der $i$-ten Bewertungsstelle des Brillenglases;
$Ph_{soll}(i)$ einen Sollwert der Differenz der horizontalen prismatischen Wirkung und der horizontalen prismatischen Referenzwirkung an der $i$-ten Bewertungsstelle des Brillenglases; und
$gPh_i$ eine Gewichtung der horizontalen prismatischen Wirkung $Ph$ an der $i$-ten Bewertungsstelle des Brillenglases

bezeichnen.

4. Verfahren nach einem der Ansprüche 1 bis 3, wobei die den i-ten Bewertungsstellen korrespondierenden Durchblickpunkte des zweiten Brillenglases in Gebrauchsstellung des zweiten Brillenglases vor den Augen des Brillenträgers mittels Ray-Tracing unter Annahme der Orthotropie berechnet werden.

5. Verfahren nach einem der vorangegangenen Ansprüche, wobei der Berechnungs- bzw. Optimierungsschritt derart erfolgt, daß zusätzlich zumindest eine weitere Eigenschaft des ersten Brillenglases in der Zielfunktion $F$ berücksichtigt wird:

$$\min F = \sum_{i} (\sum_{k} ga_i^k (A_{ist}^k(i) - A_{soll}^k(i))^2) + gP_i((PR(i) - PL(i)) - P_{soll}(i))^2$$

wobei:

$A_{ist}^k(i)$ eine tatsächliche Eigenschaft $A^k$ an der $i$-ten Bewertungsstelle des ersten Brillenglases;

$A_{soll}^k(i)$ eine geforderte Eigenschaft $A^k$ an der $i$-ten Bewertungsstelle des ersten Brillenglases; und

$ga_i^k$ eine Gewichtung der Eigenschaft $A^k$ an der $i$-ten Bewertungsstelle des ersten Brillenglases

bezeichnen.

6. Verfahren nach Anspruch 5, wobei die zumindest eine Eigenschaft des Brillenglases den Brechwert, den Refraktionsfehler und/oder den astigmatischen Fehler an der $i$-ten Bewertungsstelle des Brillenglases umfaßt.

7. Verfahren nach Anspruch 5 oder 6, wobei die zumindest eine Eigenschaft des Brillenglases die Vergrößerung und/oder die Verzerrung des Brillenglases an der *i*-ten Bewertungsstelle des Brillenglases umfaßt.

8. Verfahren nach einem der Ansprüche 1 bis 7, wobei für die Differenz der vertikalen prismatischen Wirkungen $k = 0,9$, vorzugsweise $k = 0,8$ ist; und/oder wobei die Differenz der horizontalen prismatischen Wirkungen $k = 0,95$, vorzugsweise $k = 0,8$ ist.

9. Verfahren nach einem der Ansprüche 1 bis 8, wobei das Brillenglas und das zweite Brillenglas Einstärkenbrillengläser sind.

10. Verfahren nach einem der Ansprüche 1 bis 9, wobei das Brillenglas und das zweite Brillenglas progressive Brillengläser sind.

11. Verfahren nach Anspruch 10, wobei der Berechnungs- bzw. Optimierungsschritt derart erfolgt, daß:

die Differenz der prismatischen Wirkung und der prismatischen Referenzwirkung im Fernbezugspunkt des Brillenglases kleiner als $1,3 * D$, vorzugsweise kleiner als $0,8 * D$ ist; und/oder
die Differenz der prismatischen Wirkung und der prismatischen Referenzwirkung im Nahbezugspunkt kleiner als $1,3 * D$, vorzugsweise kleiner als $1,0 * D$ ist.

12. Verfahren zur Optimierung und Herstellung eines Brillenglaspaares, wobei das Brillenglaspaar zur Korrektur einer Anisometropie $D$ der Augen eines Brillenträgers ausgelegt ist und wobei zumindest eines der beiden Brillengläser des Brillenglaspaares nach dem Verfahren gemäß einem der vorangegangenen Ansprüche optimiert wird.

13. Computerprogrammerzeugnis, welches Programmteile enthält, welche ausgelegt sind, wenn geladen und ausgeführt auf einem Computer, ein Verfahren zur Optimierung zumindest einer der Flächen eines Brillenglases unter Berücksichtigung einer Anisometropie $D$ der Augen eines Brillenträgers durchzuführen,
wobei das Verfahren zur Optimierung der zumindest einen Fläche des Brillenglases einen Berechnungs- bzw. Optimierungsschritt umfaßt, welcher derart erfolgt, daß eine Zielfunktion $F$ minimiert wird:

$$\min F = \sum_i gP_i ((PR(i) - PL(i)) - P_{soll}(i))^2 ,$$

wobei:

$PR(i)$ eine prismatische Wirkung an der *i*-ten Bewertungsstelle des Brillenglases;
$PL(i)$ eine prismatische Referenzwirkung an der *i*-ten Bewertungsstelle des Brillenglases;
$P_{soll}(i)$ einen Sollwert der Differenz $\Delta P$ der prismatischen Wirkung und der prismatischen Referenzwirkung an der *i*-ten Bewertungsstelle des Brillenglases; und
$gP_i$ eine Gewichtung der prismatischen Wirkung an der *i*-ten Bewertungsstelle des Brillenglases

bezeichnen;
wobei die prismatische Referenzwirkung $PL(i)$ die prismatische Wirkung in einem der *i*-ten Bewertungsstelle korrespondierenden Durchblickpunkt eines zweiten Brillenglases ist, und das Brillenglas und das zweite Brillenglas ein Brillenglaspaar zur gemeinsamen Verwendung in einer Brille zur Korrektur der Anisometropie des Brillenträgers bilden, und
wobei der Berechnungs- bzw. Optimierungsschritt ferner derart erfolgt, daß die Differenz $\Delta P$ der prismatischen Wirkung des Brillenglases und der prismatischen Referenzwirkung an der *i*-ten Bewertungsstelle des Brillenglases kleiner als eine obere Grenze ist, und diese Grenze eine Funktion der Anisometropie $D$ und des Abstandes $r$ der *i*-ten Bewertungsstelle vom Prismenbezugspunkt ist:

$$\Delta P(r) < k * r * D ,$$

wobei $k$ eine Konstante kleiner als 1 ist.

**14.** Vorrichtung zur Herstellung eines Brillenglases, wobei die Vorrichtung umfaßt:

- Erfassungsmittel zum Erfassen von Zieldaten eines Brillenglases;
- Berechnungs- und Optimierungsmittel zum Berechnen und Optimieren zumindest einer Fläche des Brillenglases unter Berücksichtigung einer Anisometropie $D$ der Augen eines Brillenträgers, wobei die Berechnungs- und Optimierungsmittel ausgelegt sind, eine Zielfunktion $F$ zu minimieren, wobei gilt

$$\min F = \sum_i gP_i'((PR(i) - PL(i)) - P_{soll}(i))^2,$$

wobei:

$PR(i)$ eine prismatische Wirkung an der $i$-ten Bewertungsstelle des Brillenglases;
$PL(i)$ eine prismatische Referenzwirkung an der $i$-ten Bewertungsstelle des Brillenglases;
$P_{soll}(i)$ einen Sollwert der Differenz $\Delta P$ der prismatischen Wirkung $PR(i)$ und der prismatischen Referenzwirkung $PL(i)$ an der $i$-ten Bewertungsstelle des Brillenglases; und
$gP_i$ eine Gewichtung der prismatischen Wirkung an der $i$-ten Bewertungsstelle des Brillenglases

bezeichnen;
wobei die prismatische Referenzwirkung $PL(i)$ die prismatische Wirkung in einem der $i$-ten Bewertungsstelle korrespondierenden Durchblickpunkt eines zweiten
Brillenglases ist, und das Brillenglas und das zweite Brillenglas ein Brillenglaspaar zur gemeinsamen Verwendung in einer Brille zur Korrektur der Anisometropie des Brillenträgers bilden, und
wobei die Differenz $\Delta P$ der prismatischen Wirkung des Brillenglases und der prismatischen Referenzwirkung an der $i$-ten Bewertungsstelle des Brillenglases kleiner als eine obere Grenze ist, und diese Grenze eine Funktion der Anisometropie $D$ und des Abstandes $r$ der $i$-ten Bewertungsstelle vom Prismenbezugspunkt ist:

$$\Delta P(r) < k * r * D,$$

wobei $k$ eine Konstante kleiner als 1 ist.

**Claims**

**1.** Method for optimising and producing a spectacle lens, comprising a calculation or optimisation step of at least one of the areas of the spectacle lens, taking into account anisometropia $D$ of the eyes of a spectacle wearer, the calculation or optimisation step being effected such that a target function $F$ is minimised:

$$\min F = \sum_i gP_i((PR(i) - PL(i)) - P_{ref}(i))^2,$$

there being denoted:

$PR(i)$ a prismatic effect at the $i^{th}$ evaluation position of the spectacle lens;
$PL(i)$ a prismatic reference effect at the $i^{th}$ evaluation position of the spectacle lens;
$P_{ref}(i)$ a reference value of the difference $\Delta P$ of the prismatic effect $PR(i)$ and of the prismatic reference effect $P_L(i)$ at the $i^{th}$ evaluation position of the spectacle lens; and
$gP_i$ a weighting of the prismatic effect at the $i^{th}$ evaluation position of the spectacle lens;

the prismatic reference effect $PL(i)$ being the prismatic effect in a visual point, which corresponds to the $i^{th}$ evaluation position, of a second spectacle lens, and the spectacle lens and the second spectacle lens forming a spectacle lens pair for use together in a pair of spectacles for correcting the anisometropia of the spectacle wearer, and the calculation or optimisation step being effected furthermore such that the difference $\Delta P$ of the prismatic effect of the spectacle lens and of the prismatic reference effect at the $i^{th}$ evaluation position of the spectacle lens is smaller than an upper limit, and this limit being a function of the anisometropia $D$ and of the distance $r$ of the $i^{th}$ evaluation position from the prism reference point;

$$\Delta P(r) < k * r * D \,,$$

$k$ being a constant smaller than 1.

2. Method according to claim 1, the calculation or optimisation step being effected such that the difference of the vertical prismatic effect and of the vertical prismatic reference effect is taken into account in the target function $F$:

$$\min F = \sum_i gPv_i ((PvR(i) - PvL(i)) - Pv_{\overline{ref}}(i))^2 \,,$$

there being denoted:

$PvR(i)$ a vertical prismatic effect at the $i^{th}$ evaluation position of the spectacle lens;
$PvL(i)$ a vertical prismatic reference effect at the $i^{th}$ evaluation position of the spectacle lens;
$Pv_{ref}(i)$ a reference value of the difference $\Delta Pv$ of the vertical prismatic effect and of the vertical prismatic reference effect at the $i^{th}$ evaluation position of the spectacle lens; and
$gPv_i$ a weighting of the vertical prismatic effect at the $i^{th}$ evaluation position of the spectacle lens.

3. Method according to claim 2, the calculation or optimisation step being effected such that in addition the difference of the horizontal prismatic effect and of the horizontal prismatic reference effect is taken into account in the target function $F$:

$$\min F = \sum_{i=1}^{N} gPv_i ((PvR(i) - PvL(i)) - Pv_{\overline{ref}}(i))^2 + gPh_i ((PhR(i) - PhL(i)) - Ph_{\overline{ref}}(i))^2 \,,$$

there being denoted:

$PhR(i)$ a horizontal prismatic effect at the $i^{th}$ evaluation position of the spectacle lens;
$PhL(i)$ a horizontal prismatic reference effect at the $i^{th}$ evaluation position of the spectacle lens;
$Ph_{ref}(i)$ a reference value of the difference of the horizontal prismatic effect and of the horizontal prismatic reference effect at the $i^{th}$ evaluation position of the spectacle lens; and
$gPh_i$ a weighting of the horizontal prismatic effect $Ph$ at the $i^{th}$ evaluation position of the spectacle lens.

4. Method according to one of the claims 1 to 3, the visual points, which correspond to the $i^{th}$ evaluation position, of the second spectacle lens being calculated in the position of use of the second spectacle lens in front of the eyes of the spectacle wearer by means of ray-tracing assuming orthotropy.

5. Method according to one of the preceding claims, the calculation or optimisation step being effected such that in addition at least one further property of the first spectacle lens is taken into account in the target function $F$:

$$\min F = \sum_i (\sum_k ga_i^k (A_{act}^k(i) - A_{ref}^k(i))^2) + gP_i ((PR(i) - PL(i)) - P_{ref}(i))^2$$

there being denoted:

$A^k_{act}(i)$ an actual property $A^k$ at the $i^{th}$ evaluation position of the first spectacle lens;
$A^k_{ref}(i)$ a required property $A^k$ at the $i^{th}$ evaluation position of the first spectacle lens; and
$ga^k_i$ a weighting of the property $A^k$ at the $i^{th}$ evaluation position of the first spectacle lens.

6. Method according to claim 5, the at least one property of the spectacle lens comprising the power, the refraction error and/or the astigmatic error at the $i^{th}$ evaluation position of the spectacle lens.

7. Method according to claim 5 or 6, the at least one property of the spectacle lens comprising the magnification and/or the distortion of the spectacle lens at the $i^{th}$ evaluation position of the spectacle lens.

8. Method according to one of the claims 1 to 7, there being $k = 0.9$, preferably $k = 0.8$, for the difference of the vertical prismatic effects; and/or the difference of the horizontal prismatic effects being $k = 0.95$, preferably $k = 0.8$.

9. Method according to one of the claims 1 to 8, the spectacle lens and the second spectacle lens being single vision spectacle lenses.

10. Method according to one of the claims 1 to 9, the spectacle lens and the second spectacle lens being progressive spectacle lenses.

11. Method according to claim 10, the calculation or optimisation step being effected such that:

the difference of the prismatic effect and of the prismatic reference effect in the far reference point of the spectacle lens is smaller than $1.3*D$, preferably smaller than $0.8*D$; and/or
the difference of the prismatic effect and of the prismatic reference effect in the near reference point is smaller than $1.3*D$, preferably smaller than $1.0*D$.

12. Method for optimising and producing a spectacle lens, the spectacle lens pair being designed for correction of anisometropia $D$ of the eyes of a spectacle wearer and at least one of the two spectacle lenses of the spectacle lens pair being optimised according to the method according to one of the preceding claims.

13. Computer program product, which comprises program parts which are designed, when loaded and executed on a computer, to implement a method for optimising at least one of the areas of a spectacle lens taking into account anisometropia $D$ of the eyes of a spectacle wearer,
the method for optimising the at least one area of the spectacle lens comprising a calculation or optimisation step which is effected such that a target function $F$ is minimised:

$$\min F = \sum_i gP_i((PR(i) - PL(i)) - P_{ref}(i))^2,$$

there being denoted:

$PR(i)$ a prismatic effect at the $i^{th}$ evaluation position of the spectacle lens;
$PL(i)$ a prismatic reference effect at the $i^{th}$ evaluation position of the spectacle lens;
$P_{ref}(i)$ a reference value of the difference $\Delta P$ of the prismatic effect and of the prismatic reference effect at the $i^{th}$ evaluation position of the spectacle lens; and
$gP_i$ a weighting of the prismatic effect at the $i^{th}$ evaluation position of the spectacle lens;

the prismatic reference effect $PL(i)$ being the prismatic effect at a visual point, which corresponds to the $i^{th}$ evaluation position, of a second spectacle lens, and the spectacle lens and the second spectacle lens forming a spectacle lens pair for use together in a pair of spectacles for correcting the anisometropia of the spectacle wearer, and
the calculation or optimisation step being effected furthermore such that the difference $\Delta P$ of the prismatic effect of the spectacle lens and of the prismatic reference effect at the $i^{th}$ evaluation position of the spectacle lens is smaller than an upper limit, and this limit being a function of the anisometropia $D$ and of the distance $r$ of the $i^{th}$ evaluation position from the prism reference point;

$$\Delta P(r) < k * r * D \,,$$

$k$ being a constant smaller than 1.

**14.** Device for producing a spectacle lens, the device comprising:

- detection means for detecting target data of a spectacle lens;
- calculation and optimisation means for calculating and optimising at least one area of the spectacle lens taking into account anisometropia $D$ of the eyes of a spectacle wearer, the calculation and optimisation means being designed to minimise a target function $F$, there applying

$$\min F = \sum_i gP_i((PR(i) - PL(i)) - P_{ref}(i))^2 \,,$$

there being denoted:

$PR(i)$ a prismatic effect at the $i^{th}$ evaluation position of the spectacle lens;
$PL(i)$ a prismatic reference effect at the $i^{th}$ evaluation position of the spectacle lens;
$P_{ref}(i)$ a reference value of the difference $\Delta P$ of the prismatic effect $PR(i)$ and of the prismatic reference effect $PL(i)$ at the $i^{th}$ evaluation position of the spectacle lens; and
$gP_i$ a weighting of the prismatic effect at the $i^{th}$ evaluation position of the spectacle lens;

the prismatic reference effect $PL(i)$ being the prismatic effect at a visual point, which corresponds to the $i^{th}$ evaluation position, of a second spectacle lens, and the spectacle lens and the second spectacle lens forming a spectacle lens pair for use together in a pair of spectacles for correcting the anisometropia of the spectacle wearer, and
the difference $\Delta P$ of the prismatic effect of the spectacle lens and of the prismatic reference effect at the $i^{th}$ evaluation position of the spectacle lens being smaller than an upper limit, and this limit being a function of the anisometropia $D$ and of the distance $r$ of the $i^{th}$ evaluation position from the prism reference point;

$$\Delta P(r) < k * r * D \,,$$

$k$ being a constant smaller than 1.

**Revendications**

**1.** Procédé pour l'optimisation et la fabrication d'un verre de lunettes comprenant une étape de calcul, respectivement d'optimisation, d'au moins l'une des surfaces du verre de lunette en tenant compte d'une anisométropie $D$ des yeux d'un porteur de lunettes,
l'étape de calcul, respectivement d'optimisation, s'effectuant de telle manière qu'une fonction cible $F$ est minimisée :

$$\min F = \sum_i gP_i((PR(i) - PL(i)) - P_{soll}(i))^2$$

où :

$PR(i)$ désigne une influence prismatique à la $i^{\text{ème}}$ position d'évaluation du verre de lunette ;
$PL(i)$ désigne une influence de référence prismatique à la $i^{\text{ème}}$ position d'évaluation du verre de lunette ;
$P_{soll}(i)$ désigne une valeur souhaitée de la différence $\Delta P$ de l'influence prismatique $PR(i)$ et de l'influence de référence prismatique $PL(i)$ à la $i^{\text{ème}}$ position d'évaluation du verre de lunette ; et

$gP_i$ désigne une pondération de l'influence prismatique à la $i^{ème}$ position d'évaluation du verre de lunette ;

l'influence de référence prismatique $PL(i)$ constitue l'influence prismatique dans un centre visuel correspondant à la $i^{ème}$ position d'évaluation d'un second verre de lunettes, et le verre de lunettes et le second verre de lunettes d'une paire de verres de lunettes contribuant à une utilisation commune dans des lunettes pour la correction de l'anisométropie du porteur de lunettes, et

l'étape de calcul, respectivement d'optimisation, s'effectuant en outre de telle manière que la différence $\Delta P$ de l'influence prismatique du verre de lunettes et de l'influence de référence prismatique à la $i^{ème}$ position d'évaluation du verre de lunettes est inférieure à une limite supérieure et cette limite est une fonction de l'anisométropie D et de la distance r de la $i^{ème}$ position d'évaluation du point se rapportant au prisme :

$$\Delta P(r) < k * r * D,$$

où $k$ est une constante inférieure à 1.

**2.** Procédé selon la revendication 1 où l'étape de calcul, respectivement d'optimisation, s'effectue de telle manière que la différence de l'influence prismatique verticale et de l'influence de référence prismatique verticale est prise en compte dans la fonction cible $F$ :

$$\min \ F = \sum_i gPv_i((PvR(i) - PvL(i)) - Pv_{soll}(i))^2$$

où

$PvR(i)$ désigne une influence prismatique verticale à la $i^{ème}$ position d'évaluation du verre de lunettes ;
$PvL(i)$ désigne une influence de référence prismatique verticale à la $i^{ème}$ position d'évaluation du verre de lunettes ;
$Pv_{soll}(i)$ désigne une valeur souhaitée de la différence $\Delta Pv$ de l'influence prismatique verticale et de l'influence de référence prismatique verticale à la $i^{ème}$ position d'évaluation du verre de lunettes ; et
$gPv_i$ désigne une pondération de l'influence prismatique verticale à la $i^{ème}$ position d'évaluation du verre de lunettes.

**3.** Procédé selon la revendication 2 où l'étape de calcul, respectivement d'optimisation, s'effectue de telle manière qu'en outre il est tenu compte de la différence de l'influence prismatique horizontale et de l'influence de référence prismatique horizontale dans la fonction cible $F$ :

$$\min \ F = \sum_{i=1}^{N} gPv_i((PvR(i) - PvL(i)) - Pv_{soll}(i))^2 +$$

$$gPh_i((PhR(i) - PhL(i)) - Ph_{soll}(i))^2,$$

où

$PhR(i)$ désigne une influence prismatique horizontale à la $i^{ème}$ position d'évaluation du verre de lunettes ;
$PhL(i)$ désigne une influence de référence prismatique horizontale à la $i^{ème}$ position d'évaluation du verre de lunettes ;
$Ph_{soll}(i)$ désigne une valeur souhaitée de la différence de l'influence prismatique horizontale et de l'influence de référence prismatique horizontale à la $i^{ème}$ position d'évaluation du verre de lunettes ; et
$gPh_i$ désigne une pondération de l'influence prismatique horizontale $Ph$ à la $i^{ème}$ position d'évaluation du verre de lunettes.

**4.** Procédé selon l'une des revendications de 1 à 3 où les centres visuels correspondant aux $i^{èmes}$ positions d'évaluation du second verre de lunettes sont calculés en position d'utilisation du second verre de lunettes devant les yeux du porteur de lunettes au moyen d'un Ray-Tracing en tenant compte de l'orthotropie.

5. Procédé selon l'une des revendications précédentes où l'étape de calcul, respectivement d'optimisation, s'effectue de telle manière qu'il est tenu compte en outre d'au moins encore une autre propriété du premier verre de lunettes dans la fonction cible $F$ :

$$\min\ F = \sum_i\ (\sum_k\ ga^k{}_i(A^k{}_{ist}(i)\ -\ A^k{}_{soll}(i))^2\ +$$

$$gP_i((PR(i)\ -\ PL(i))\ -\ P_{soll}(i))^2$$

où

$A^k{}_{ist}(i)$ désigne une propriété réelle $A^k$ à la $i^{ème}$ position d'évaluation du premier verre de lunettes ;
$A^k{}_{soll}(i)$ désigne une propriété $A^k$ voulue à la $i^{ème}$ position d'évaluation du premier verre de lunettes ; et
$ga^k{}_i$ désigne une pondération de la propriété $A^k$ à la $i^{ème}$ position d'évaluation du premier verre de lunettes.

6. Procédé selon la revendication 5 où au moins une propriété du verre de lunettes comprend la valeur de la réfraction, l'erreur de réfraction et/ou l'erreur astigmatique à la $i^{ème}$ position d'évaluation du verre de lunettes.

7. Procédé selon les revendications 5 ou 6 où au moins une propriété du verre de lunettes comprend l'agrandissement et/ou le rétrécissement du verre de lunettes à la $i^{ème}$ position d'évaluation du verre de lunettes.

8. Procédé selon l'une des revendications de 1 à 7 où, pour la différence des influences prismatiques verticales, $k = 0,9$, de préférence, $k = 0,8$ ; et/ou, pour la différence des influences prismatiques horizontales, $k = 0,95$, de préférence $k = 0,8$.

9. Procédé selon l'une des revendications de 1 à 8 où le verre de lunettes et le second verre de lunettes sont des verres de lunettes unifocaux.

10. Procédé selon l'une des revendications de 1 à 9 où le verre de lunettes et le second verre de lunettes sont des verres de lunettes progressifs.

11. Procédé selon la revendication 10 où l'étape de calcul, respectivement d'optimisation, s'effectue de telle sorte que :

la différence de l'influence prismatique et de l'influence de référence prismatique pour le point concernant la vision de loin du verre de lunettes est inférieure à *1,3\*D*, de préférence inférieure à *0,8\*D* ; et/ou
la différence de l'influence prismatique et de l'influence de référence prismatique pour le point concernant la vision de près est inférieure à *1,3\*D*, de préférence est inférieure à *1,0\*D*.

12. Procédé pour l'optimisation et la fabrication d'une paire de verres de lunettes où la paire de verres de lunettes est réalisée pour la correction d'une anisométropie *D* des yeux d'un porteur de lunettes et où au moins un des verres parmi les deux verres de lunettes de la paire de verres de lunettes est optimisé selon le procédé selon l'une des revendications précédentes.

13. Résultat d'un programme d'ordinateur, lequel contient des parties de programme qui sont interprétées, lorsqu'elles sont chargées et réalisées par un ordinateur, pour réaliser un procédé d'optimisation d'au moins une des surfaces d'un verre de lunettes en tenant compte d'une anisométropie *D* des yeux d'un porteur de lunettes, le procédé pour l'optimisation d'au moins une surface de verre de lunettes comprenant une étape de calcul, respectivement d'optimisation, qui s'effectue de telle manière qu'une fonction cible *F* est minimisée :

$$\min\ F = \sum_i\ gP_i((PR(i)\ -\ PL(i))\ -\ P_{soll}(i))^2$$

où

*PR(i)* désigne une influence prismatique à la $i^{\text{ème}}$ position d'évaluation du verre de lunette ;

*PL(i)* désigne une influence de référence prismatique à la $i^{\text{ème}}$ position d'évaluation du verre de lunette ;

$P_{soll}(i)$ désigne une valeur souhaitée de la différence $\Delta P$ de l'influence prismatique *PR(i)* et de l'influence de référence prismatique *PL(i)* à la $i^{\text{ème}}$ position d'évaluation du verre de lunette ; et

$gP_i$ désigne une pondération de l'influence prismatique à la $i^{\text{ème}}$ position d'évaluation du verre de lunette ;

l'influence de référence prismatique *PL(i)* constituant l'influence prismatique dans un centre visuel correspondant à la $i^{\text{ème}}$ position d'évaluation d'un second verre de lunettes, et le verre de lunettes et le second verre de lunettes d'une paire de verres de lunettes contribuant à une utilisation commune dans des lunettes pour la correction de l'anisométropie du porteur de lunettes, et

l'étape de calcul, respectivement d'optimisation, s'effectuant en outre de telle manière que la différence $\Delta P$ de l'influence prismatique du verre de lunettes et de l'influence de référence prismatique à la $i^{\text{ème}}$ position d'évaluation du verre de lunettes est inférieure à une limite supérieure et cette limite est une fonction de l'anisométropie *D* et de la distance *r* de la $i^{\text{ème}}$ position d'évaluation du point se rapportant au prisme :

$$\Delta P(r) \; < \; k*r*D,$$

où *k* est une constante inférieure à 1.

14. Dispositif pour la fabrication d'un verre de lunettes, le dispositif comprenant :

- un moyen d'évaluation pour l'évaluation des données cibles d'un verre de lunettes ;
- un moyen de calcul, respectivement d'optimisation, pour le calcul et l'optimisation d'au moins une surface d'un verre de lunettes en tenant compte d'une anisométropie *D* des yeux d'un porteur de lunettes, les moyens de calcul et d'optimisation étant conçus pour minimiser une fonction cible *F*, où on a

$$\min \; F = \sum_i \; gP_i((PR(i) \; - \; PL(i)) \; - \; P_{soll}(i))^2$$

où

*PR(i)* désigne une influence prismatique à la $i^{\text{ème}}$ position d'évaluation du verre de lunette ;

*PL(i)* désigne une influence de référence prismatique à la $i^{\text{ème}}$ position d'évaluation du verre de lunette ;

$P_{soll}(i)$ désigne une valeur souhaitée de la différence $\Delta P$ de l'influence prismatique *PR(i)* et de l'influence de référence prismatique *PL(i)* à la $i^{\text{ème}}$ position d'évaluation du verre de lunette ; et

$gP_i$ désigne une pondération de l'influence prismatique à la $i^{\text{ème}}$ position d'évaluation du verre de lunette ;

l'influence de référence prismatique *PL(i)* constituant l'influence prismatique dans un centre visuel correspondant à la $i^{\text{ème}}$ position d'évaluation d'un second verre de lunettes, et le verre de lunettes et le second verre de lunettes d'une paire de verres de lunettes contribuant à une utilisation commune dans des lunettes pour la correction de l'anisométropie du porteur de lunettes, et

la différence $\Delta P$ de l'influence prismatique du verre de lunettes et de l'influence de référence prismatique à la $i^{\text{ème}}$ position d'évaluation du verre de lunettes étant inférieure à une limite supérieure, et cette limite étant une fonction de l'anisométropie *D* et de la distance *r* de la $i^{\text{ème}}$ position d'évaluation du point se rapportant au prisme :

$$\Delta P(r) \; < \; k*r*D,$$

où *k* est une constante inférieure à 1.

**Fig. 1**

**Fig. 2**

**Fig. 3**

**Fig. 4**

Fig. 5

**Fig. 6**

**Fig. 7**

**Fig. 8**

**Fig. 9**

**IN DER BESCHREIBUNG AUFGEFÜHRTE DOKUMENTE**

**In der Beschreibung aufgeführte Patentdokumente**

- WO 0146744 A
- WO 2004086125 A
- US 20030117578 A

**In der Beschreibung aufgeführte Nicht-Patentliteratur**

- **HEINZ DIEPES.** Refraktionsbestimmung. DOZ Verlag, 2004, 74-75
- **LEHRBUCH ; LAN P. HOWARD ; BRIAN J. ROGERS.** Binokular Vision and Stereopsis. Oxford University Press, 1995, 38-39560